# EUROPÄISCHE PATENTSCHRIFT

(11) **EP 4 385 113 B1**
(45) Veröffentlichungstag und Bekanntmachung des Hinweises auf die Patenterteilung: **15.01.2025**
(21) Anmeldenummer: 22789209.8
(22) Anmeldetag: 16.09.2022
(51) Int. Cl.: H02J 50/10, B60L 13/03, H01F 38/14, B65G 54/02

(54) **ENERGIEÜBERTRAGUNG IN EINEM LINEAREN TRANSPORTSYSTEM**
ENERGY TRANSFER IN A LINEAR TRANSPORT SYSTEM
TRANSFERT D'ÉNERGIE DANS UN SYSTÈME DE TRANSPORT LINÉAIRE

(30) Priorität: 17.09.2021 DE 102021124121
(43) Veröffentlichungstag der Anmeldung: 19.06.2024
(73) Patentinhaber: Beckhoff Automation GmbH, 33415 Verl (DE)
(72) Erfinder: BRINKER, Andreas, 49082 Osnabrück (DE); VORBOHLE, Thomas, 33397 Rietberg (DE); ACHTERBERG, Jan, 47249 Duisburg (DE)
(74) Vertreter: Patentanwaltskanzlei WILHELM & BECK
(86) Internationale Anmeldenummer: PCT/EP2022/075753
(87) Internationale Veröffentlichungsnummer: WO 2023/041698

(56) Entgegenhaltungen:
- WO-A1-2005/021317
- WO-A1-2018/221532
- DE-A1- 102018 111 715
- US-A1- 2016 352 139
- US-A1- 2019 068 101
- US-A1- 2021 099 119

## Beschreibung

Die Erfindung betrifft ein Verfahren zum Übertragen von Energie von einer stationären Einheit eines linearen Transportsystems zu einer beweglichen Einheit eines linearen Transportsystems sowie ein lineares Transportsystem.

Aus dem Stand der Technik sind lineare Transportsysteme bekannt, bei denen eine bewegliche Einheit entlang einer Führungsschiene bewegt werden kann und die einen Linearmotor zum Antreiben der beweglichen Einheit aufweisen. Der Linearmotor umfasst einen Stator und einen Läufer. Der Stator kann dabei zumindest ein entlang der Führungsschiene stationär angeordnetes Motormodul mit einer oder mehreren Antriebsspulen aufweisen, während die bewegliche Einheit an einem Schlitten angeordnet ist und einen oder mehrere Magnete aufweisen kann. Durch die Bestromung der Antriebsspulen kann eine Kraft auf die Magnete der beweglichen Einheit erzeugt werden derart, dass sich die bewegliche Einheit entlang der Führungsschiene bewegt. Es kann ferner vorgesehen sein, dass die bewegliche Einheit bzw. der Schlitten ein Werkzeug aufweist, wobei zum Betrieb des Werkzeugs Energie von der stationären Einheit zur beweglichen Einheit übertragen werden muss. Ferner kann es notwendig sein, Daten sowohl von der stationären Einheit zur beweglichen Einheit als auch von der beweglichen Einheit zur stationären Einheit zu übertragen. Die DE 10 2018 111 715 A1 offenbart die Merkmale des Obergriffs der unabhängigen Ansprüche und beschreibt ein solches lineares Transportsystem mit einer Energieübertragung zwischen einem stationären Spulenmodul, also einer stationären Einheit, und einem beweglichen Schlitten, also einer beweglichen Einheit. Die DE 10 2020 107 782 A1 offenbart ebenfalls eine Energieübertragung in einem linearen Transportsystem, bei dem Energiesendespulen anhand einer Position der beweglichen Einheit und einer an der beweglichen Einheit angeordneten Energieempfangsspule ausgewählt und anhand eines Energiemengensignals bestromt werden. Aus der WO 2018/221532 A1 und der WO2005/021317 A1 sind jeweils Verfahren zum drahtlosen Übertragen von Energie von einer stationären Einheit zu einer beweglichen Einheit bekannt.

Eine Aufgabe der vorliegenden Erfindung ist es, ein verbessertes Verfahren zur Energieübertragung von einer stationären Einheit zu einer beweglichen Einheit eines linearen Transportsystems bereitzustellen. Eine weitere Aufgabe der Erfindung ist es, ein lineares Transportsystem bereitzustellen, bei dem eine solche Energieübertragung möglich ist.

Diese Aufgaben werden mit dem Verfahren und dem linearen Transportsystem der unabhängigen Patentansprüche gelöst. Vorteilhafte Ausgestaltungen sind in den abhängigen Patentansprüchen angegeben.

Ein lineares Transportsystem umfasst eine Führungsschiene zum Führen einer beweglichen Einheit, mehrere stationäre Einheiten sowie einen Linearmotor zum Antreiben der beweglichen Einheit entlang der Führungsschiene. Der Linearmotor weist einen Stator und einen Läufer auf, wobei der Stator die stationären Einheiten umfasst, welche jeweils eine oder mehrere Antriebsspulen aufweisen. Der Läufer ist an der beweglichen Einheit angeordnet und weist einen oder mehrere Magnete auf, wobei die stationären Einheiten jeweils eine oder mehrere Energiesendespulen umfassen, wobei jede Energiesendespule eine Ansteuerungselektronik aufweist. Die bewegliche Einheit weist mindestens eine Energieempfangsspule auf. Um Energie von der stationären Einheit zur beweglichen Einheit des linearen Transportsystems zu übertragen, führen die Ansteuerungselektroniken der Energiesendespulen die im Folgenden beschriebenen Schritte aus. Es wird ein Energiemengensignal für die betreffende Energiesendespule eingelesen. Anschließend wird das Energiemengensignal in ein Puls-Pausen-Verhältnis umgesetzt und die Energiesendespule anhand des Puls-Pausen-Verhältnisses angesteuert. Ansteuern kann dabei auch Regeln umfassen, so dass anhand des Energiemengensignals und des Zählers ein Strom durch die Energiesendespule geregelt werden kann.

Grundsätzlich ist ebenfalls denkbar, mit dem beschriebenen Verfahren Energie von der beweglichen Einheit zur stationären Einheit zu übertragen, wobei die Energieempfangsspule dann die Energie aussendet und die Energiesendespule die Energie empfängt.

In einem Ausführungsbeispiel erfolgt die Umsetzung des Energiemengensignal in das Puls-Pausen-Verhältnis mittels eines Zählers. Anhand des Puls-Pausen-Verhältnisses wird ein Strom durch die Energiesendespule gesteuert.

Dabei kann vorgesehen sein, dass das Energiemengensignal mit einem Wert des Zählers verknüpft wird und beispielsweise ein mit der Energiesendespule verknüpfter Schalter für bestimmte Zählerwerte leitend und für andere Zählerwerte nicht-leitend geschaltet wird. Für welche Zählerwerte der Schalter jeweils leitend bzw. nicht-leitend geschaltet wird, kann sich dabei aus dem Energiemengensignal ergeben. Durch dieses Verfahren wird eine einfache Ansteuerung der Energiesendespule ermöglicht.

Beispielsweise kann der Schalter jeweils leitend geschalten werden, wenn der Zähler oberhalb eines aus dem Energiemengensignal berechneten Zählerwerts liegt.

In einer Ausführungsform weist die Ansteuerungselektronik der Energiesendespule zumindest eine erste Halbbrücke mit einem ersten Schalter und einem zweiten Schalter und eine zweite Halbbrücke mit einem dritten Schalter und einem vierten Schalter auf. Die Energiesendespule ist zwischen einem ersten Halbbrückenmittelpunkt und einem zweiten Halbbrückenmittelpunkt angeordnet, wobei der erste Halbbrückenmittelpunkt zwischen dem ersten Schalter und dem zweiten Schalter angeordnet ist und der zweite Halbbrückenmittelpunkt zwischen dem dritten Schalter und dem vierten Schalter angeordnet ist. Dabei kann es vorgesehen sein, dass der erste Schalter und der dritte Schalter mit einem ersten Anschluss einer Spannungsquelle verbunden sind und der zweite Schalter und der vierte Schalter mit einem zweiten Anschluss einer Spannungsquelle verbunden sind. Der Zähler zählt jeweils von einem Minimalwert bis zu einem Maximalwert nach oben und anschließend vom Maximalwert zum Minimalwert nach unten. Anschließend kann vorgesehen sein, dass sich dieser Zählvorgang wiederholt, als bei Erreichen des Minimums wieder zum Maximum nach oben und anschließend wieder vom Maximum nach unten gezählt wird. Das Energiemengensignal wird mit einem oberen Zählerwert und einem unteren Zählerwert verknüpft. Der erste Schalter und der vierte Schalter werden leitend geschaltet, wenn der Zähler oberhalb des oberen Zählerwertes liegt, und der zweite Schalter und der dritte Schalter werden leitend geschaltet, wenn der Zähler unterhalb des unteren Zählerwertes liegt.

Durch die Halbbrücken und die Art der Zählweise kann so die Energiesendespule, wenn der Zähler oberhalb des oberen Zählerwertes liegt, mit Stromfluss in einer ersten Stromflussrichtung beaufschlagt werden, und, wenn der Zähler unterhalb des unteren Zählerwertes liegt, mit Strom mit einer Stromflussrichtung entgegengesetzt zur ersten Stromflussrichtung beaufschlagt werden. Dies ermöglicht eine verbesserte Ansteuerung der Energiesendespulen.

In einer Ausführungsform soll eine Nennleistung übertragen werden. Dann ist der obere Zählerwert größer als drei Viertel einer Differenz aus Maximalwert und Minimalwert zuzüglich des Minimalwerts. Der untere Zählerwert ist kleiner als ein Viertel der Differenz aus Maximalwert und Minimalwert zuzüglich des Minimalwerts.

Somit ist, wenn die Nennleistung übertragen werden soll, durch dieses Verfahren erreicht, dass weniger als ein Viertel der Zählerlaufdauer die Energiesendespule in der ersten Stromflussrichtung betrieben wird, anschließend die Spule mehr als ein Viertel der Zählerlaufdauer nicht bestromt wird, anschließend die Energiesendespule weniger als ein Viertel der der Zählerlaufdauer in der zweiten Stromflussrichtung betrieben wird und daran anschließend die Energiesendespule mehr als ein Viertel der Zählerlaufdauer nicht bestromt wird. Dies ermöglicht eine effiziente Ansteuerung.

In einer Ausführungsform beträgt für die Übertragung der Nennleistung der obere Zählerwert mindestens sieben Achtel der Differenz aus Maximalwert und Minimalwert zuzüglich des Minimalwerts und der untere Zählerwert beträgt maximal ein Achtel der Differenz aus Maximalwert und Minimalwert zuzüglich des Minimalwerts. Dies ermöglicht, eine thermische Auslastung der Energieübertragung zu verringern, da die Energiesendespule weniger lange bestromt wird.

In einer Ausführungsform ist zum Übertragen einer die Nennleistung übersteigenden Spitzenleistung der obere Zählerwert mindestens drei Viertel der Differenz aus Maximalwert und Minimalwert zuzüglich des Minimalwerts und der untere Zählerwert höchstens ein Viertel der Differenz aus Maximalwert und Minimalwert zuzüglich des Minimalwerts.

Die Spitzenleistung kann dabei insbesondere dann übertragen werden, wenn an der beweglichen Einheit große Energiemengen benötigt werden. Dabei kann insbesondere vorgesehen sein, dass die Spitzenleistung nicht dauerhaft, sondern nur für vorgegebene Zeitdauern übertragen wird und anschließend die Sendeleistung wieder reduziert wird, um eine thermische Auslastung der Energiesendespule bzw. der Ansteuerungselektronik zu verhindern. Insbesondere kann das der Fall sein, wenn für die Übertragung der Nennleistung der obere Zählerwert mindestens sieben Achtel der Differenz aus Maximalwert und Minimalwert zuzüglich des Minimalwerts und der untere Zählerwert maximal ein Achtel der Differenz aus Maximalwert und Minimalwert zuzüglich des Minimalwerts ist.

Ist der Minimalwert Null, so können die zugrundeliegenden Gleichungen vereinfacht werden.

In einer Ausführungsform wird ferner ein Datenübertragungssignal von der Ansteuerungselektronik eingelesen. Das Datenübertragungssignal beinhaltet, dass im Bereich der Energiesendespule eine Datenübertragung stattfindet. In diesem Fall wird zumindest einmal, wenn der Zähler oberhalb des oberen Zählerwertes liegt, der erste Schalter und der vierte Schalter nicht-leitend geschaltet und zumindest einmal, wenn der Zähler unterhalb des unteren Zählerwertes liegt, der zweite Schalter und der dritte Schalter nicht-leitend geschaltet. Dies ist insbesondere dann sinnvoll, wenn eine Datenübertragung durch die Übertragung von Energie gestört werden könnte und die Sicherheit der Datenübertragung Vorrang hat vor der übertragenen Energie. Durch das dann folgende Abschalten der Energiesendespulen kann eine Qualität der Datenübertragung verbessert werden.

In einer Ausführungsform des Verfahrens gibt zusätzlich eine Steuereinheit ein Synchronisationssignal an die Ansteuerungselektroniken der Energiesendespulen aus. Die Ansteuerungselektroniken synchronisieren die Zähler anhand des Synchronisationssignals. Dies ermöglicht, eine Energieübertragung mit verschiedenen Energiesendespulen entsprechend zu synchronisieren. Dies kann beispielsweise mittels einer PLL in jeder Ansteuerungselektronik erfolgen.

In einer Ausführungsform des Verfahrens ermittelt eine Steuereinheit Positionsdaten der Energieempfangsspule der beweglichen Einheit und wählt mindestens eine Energiesendespule innerhalb des linearen Transportsystems anhand der Positionsdaten der Energieempfangsspule aus. Anschließend wird ein Energiemengensignal an die Ansteuerungselektronik der ausgewählten Energiesendespulen ausgegeben. Dies ermöglicht, die Bestromung der Energiesendespulen dahingehend zu steuern, dass nur dort Energiesendespulen bestromt werden, wo sich auch bewegliche Einheiten und damit Energieempfangsspulen befinden können.

In einer Ausführungsform des Verfahrens ergeben die Positionsdaten der Energieempfangsspule der beweglichen Einheit, dass sich die Energieempfangsspule von einer ersten Energiesendespule zu einer zweiten Energiesendespule bewegt. Eine erste Ansteuerungselektronik der ersten Energiesendespule und eine zweite Ansteuerungselektronik der zweiten Energiesendespule werden jeweils anhand des Synchronisationssignals synchronisiert. Ein erster Zähler der ersten Ansteuerungselektronik und ein zweiter Zähler der zweiten Ansteuerungselektronik werden anhand des Synchronisationssignals gleichzeitig gestartet. Das Energiemengensignal wird an die erste Ansteuerungselektronik und die zweite Ansteuerungselektronik ausgegeben, wobei die Ansteuerungselektroniken das Energiemengensignal mit einem oberen Zählerwert und einem unteren Zählerwert verknüpfen. Der erste Schalter und der vierte Schalter der ersten Ansteuerungselektronik werden leitend geschalten, wenn der Zähler oberhalb des oberen Zählerwertes liegt. Der zweite Schalter und der dritte Schalter der ersten Ansteuerungselektronik werden leitend geschalten, wenn der Zähler unterhalb des unteren Zählerwertes liegt. Der erste Schalter und der vierte Schalter der zweiten Ansteuerungselektronik werden leitend geschalten, wenn der Zähler oberhalb des oberen Zählerwertes liegt, und der zweite Schalter und der dritte Schalter der zweiten Ansteuerungselektronik werden leitend geschalten, wenn der Zähler unterhalb des unteren Zählerwertes liegt. Dies ermöglicht einen synchronen Betrieb der ersten Energiesendespule und der zweiten Energiesendespule, sodass die bewegliche Einheit möglichst störungsfrei von der ersten Energiesendespule zur zweiten Energiesendespule bewegt werden kann.

In einer Ausführungsform ergeben die Positionsdaten, dass die Energieempfangsspule zwischen der ersten Energiesendespule und der zweiten Energiesendespule angeordnet ist. In diesem Fall wird der obere Zählerwert reduziert und der untere Zählerwert erhöht. Ist die Energieempfangsspule zwischen der ersten Energiesendespule und der zweiten Energiesendespule angeordnet, so besteht keine ideale Kopplung zwischen den Energiesendespulen und der Energieempfangsspule. Durch die Reduzierung des oberen Zählerwertes und die Erhöhung des unteren Zählerwertes wird nun die über die Energiesendespulen übertragene Energiemenge erhöht, sodass die reduzierte Kopplung ausgeglichen werden kann. Dies kann insbesondere derart erfolgen, dass sich die bewegliche Einheit von der ersten Energiesendespule zur zweiten Energiesendespule bewegt und die Energieempfangsspule eine konstante Energiemenge empfängt. Das bedeutet insbesondere, dass für die Energieempfangsspule nicht zu unterscheiden ist, ob während der gesamten Energieübertragung die Energieempfangsspule an eine Energiesendespule oder an zwei Energiesendespulen gekoppelt war und die Energie über eine Energiesendespule oder über zwei Energiesendespulen übertragen wurde.

In einer Ausführungsform wird für den Fall, dass eine Leistung größer der Nennleistung übertragen werden soll, zusätzlich eine thermische Belastung der Energieübertragung bestimmt. Außerdem wird eine Abkühlzeit berechnet. Eine erneute Reduzierung des oberen Zählerwertes und eine erneute Erhöhung des unteren Zählerwertes derart, dass eine Leistung größer als die Nennleistung übertragen werden kann, erfolgt erst nach der Abkühlzeit. Dies ermöglicht, eine thermische Belastung der Energieübertragung bzw. der Energiesendespulen und Antriebselektroniken zu vermeiden.

In einer Ausführungsform wird eine Bestromung der Antriebsspulen derart verändert, dass sich die bewegliche Einheit schneller bewegt. Dies ermöglicht insbesondere, wenn aufgrund der Bewegung der Energieempfangsspule von der ersten Energiesendespule zur zweiten Energiesendespule die übertragene Energiemenge erhöht werden muss, die bewegliche Einheit in diesem Bereich schneller zu bewegen und dadurch die Zeitdauer der erhöhten Energieübertragung zu reduzieren. Ist die bewegliche Einheit und damit die Energieempfangsspule ausschließlich im Bereich der ersten Energiesendespule oder ausschließlich im Bereich der zweiten Energiesendespule angeordnet, kann ferner ein Antriebsstrom entsprechend reduziert werden, um insgesamt eine vorgegebene Durchschnittsgeschwindigkeit der beweglichen Einheit einzuhalten.

In einer Ausführungsform wird eine Erhöhungszeitdauer, während der die Bestromung der Antriebsspule verändert wird, aus einer Geschwindigkeit der beweglichen Einheit berechnet. Die Erhöhungszeitdauer ist also die Zeit, in der die bewegliche Einheit schneller bewegt wird.

In einer Ausführungsform werden der obere Zählerwert und der untere Zählerwert anhand einer im Bereich der Energiesendespule gemessenen Temperatur angepasst. Dies kann insbesondere dazu dienen, eine thermische Überlastung der Energiesendespule bzw. der Antriebselektronik zu vermeiden. Liegt die gemessene Temperatur oberhalb einer kritischen Temperatur, können insbesondere der obere Zählerwert erhöht und der untere Zählerwert reduziert werden, sodass eine übertragene Energiemenge sinkt, eine thermische Belastung der Energiesendespule und der Antriebselektronik jedoch vermieden wird.

Die Erfindung umfasst ferner ein lineares Transportsystem mit zumindest einer stationären Einheit und zumindest einer beweglichen Einheit sowie einer Steuereinheit. Das lineare Transportsystem weist eine Führungsschiene zum Führen der beweglichen Einheit, mehrere stationäre Einheiten sowie einen Linearmotor zum Antreiben der beweglichen Einheit entlang der Führungsschiene auf. Der Linearmotor umfasst einen Stator und einen Läufer. Der Stator umfasst die stationären Einheiten, welche jeweils eine oder mehrere Antriebsspulen umfassen. Der Läufer ist an der beweglichen Einheit angeordnet und umfasst einen oder mehrere Magnete. Die stationären Einheiten umfassen jeweils eine oder mehrere Energiesendespulen. Jeder Energiesendespule ist eine Ansteuerungselektronik zugeordnet. Die bewegliche Einheit umfasst mindestens eine Energieempfangsspule. Die Ansteuerungselektronik ist eingerichtet, ein Energiemengensignal für die betreffende Energiesendespule einzulesen, insbesondere ein von der Steuereinheit ausgesendetes Energiemengensignal einzulesen, in ein Puls-Pausen-Verhältnis umzusetzen und die Energiesendepulse anhand des Puls-Pausen-Verhältnisses anzusteuern.

In einer Ausführungsform ist die Ansteuerungselektronik eingerichtet, das Energiemengensignals mittels eines Zählers in ein Puls-Pausen-Verhältnis umzusetzen, wobei anhand des Puls-Pausen-Verhältnisses ein Strom durch die Energiesendespule gesteuert wird.

In einer Ausführungsform umfasst die bewegliche Einheit des linearen Transportsystems einen Glättungskondensator,

Die Erfindung umfasst ferner die Ansteuerungselektroniken und Steuereinheiten, die zur Ausführung des erfindungsgemäßen Verfahrens eingerichtet sind und darüber hinaus Computerprogramme zur Ausführung des Verfahrens.

Die Erfindung wird nachfolgend anhand von Ausführungsbeispielen und unter Bezugnahme auf Figuren näher erläutert. Dabei zeigen in jeweils schematischer Darstellung
- Fig. 1: ein lineares Transportsystem;
- Fig. 2: eine seitliche Draufsicht auf einen Ausschnitt des linearen Transportsystems der Fig. 1;
- Fig. 3: ein Schaltbild zur Ansteuerung von Energiesendespulen;
- Fig. 4: eine Datenübertragung zur Ansteuerung;
- Fig. 5: eine Ansteuerungselektronik;
- Fig. 6: eine erste Ansteuerung einer Energiesendespule;
- Fig. 7: eine zweite Ansteuerung einer Energiesendespule;
- Fig. 8: ein Temperaturverlaufsdiagramm;
- Fig. 9: eine stationäre Einheit und eine bewegliche Einheit eines linearen Transportsystems;
- Fig. 10: eine elektrische Schaltung einer beweglichen Einheit; und
- Fig. 11: eine dritte Ansteuerung einer Energiesendespule.

Im Folgenden können für gleiche Merkmale gleiche Bezugszeichen verwendet werden. Weiter kann es aus Gründen der Übersichtlichkeit vorgesehen sein, dass nicht in jeder Figur sämtliche Elemente gezeigt sind. Weiter kann es der Übersicht halber vorgesehen sein, dass nicht in jeder Zeichnung jedes Element mit einem eigenen Bezugszeichen versehen ist.

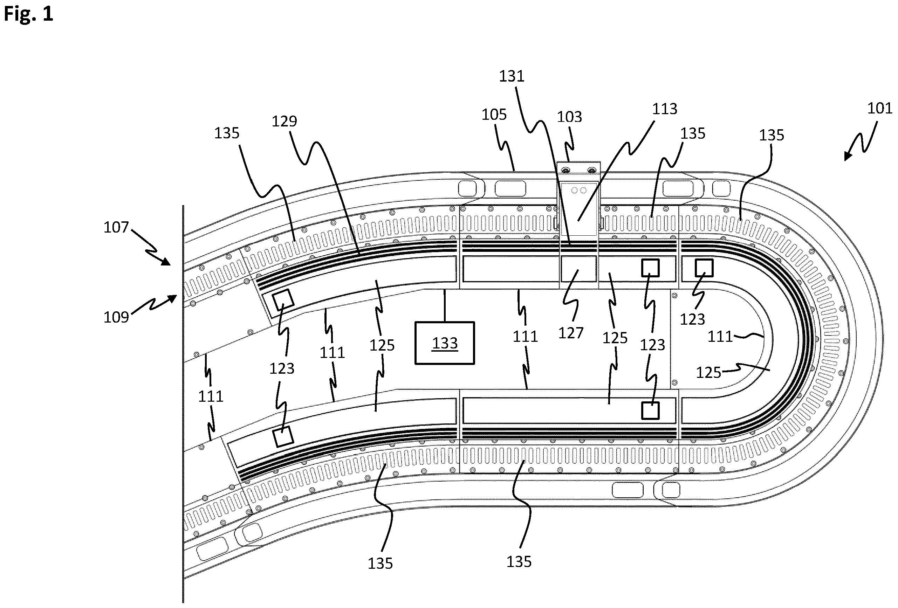

Fig. 1 zeigt einen Ausschnitt eines linearen Transportsystems 101. Das lineare Transportsystem 101 umfasst eine bewegliche Einheit 103, die durch eine Führungsschiene 105 geführt ist. Die bewegliche Einheit 103 umfasst hier nicht dargestellte Laufrollen und einen Läufer 113 mit Magneten (nicht dargestellt). Die Laufrollen der beweglichen Einheit 103 können dabei auf Laufflächen der Führungsschiene 105 rollen.

Das lineare Transportsystem 101 umfasst ferner einen Linearmotor 107, wobei der Linearmotor 107 einen Stator 109 aufweist. Der Stator 109 des Linearmotors 107 ist in den stationären Einheiten 111 angeordnet, die hierzu jeweils mehrere Antriebsspulen 135 aufweisen. Dabei sind die stationären Einheiten 111 in Fig. 1 teilweise unterschiedlich ausgestaltet, wobei einzelne der stationären Einheiten 111 gerade oder gebogen sein können. Der Linearmotor 107 umfasst ferner den Läufer 113, der an der beweglichen Einheit 103 angeordnet ist und einen oder mehrere Magnete umfasst. Die stationären Einheiten 111 umfassen jeweils eine Energiesendespule 125. Die bewegliche Einheit 103 umfasst eine Energieempfangsspule 127. In einer in Fig. 1 nicht dargestellten alternativen Ausführungsform kann eine stationäre Einheit 111 auch mehrere Energiesendespulen 125 umfassen. Die stationären Einheiten 111 und die Führungsschiene 105 können umlaufend angeordnet sein, so dass die bewegliche Einheit 103 auf einer geschlossenen Bahn bewegt werden kann.

Jede stationäre Einheit 111 umfasst ferner eine Ansteuerungselektronik 123, mit der ein durch die Energiesendespule 125 fließender Strom gesteuert werden kann. Das lineare Transportsystem 101 umfasst ferner eine Steuereinheit 133, die mit einer der stationären Einheiten 111 direkt verbunden ist. Ein Datensignal der Steuereinheit 133 kann von einer stationären Einheit 111 zur nächsten stationären Einheit 111 weitergegeben werden. Alternativ, nicht in Fig. 1 dargestellt, sind auch Ausgestaltungen denkbar, bei denen die Steuereinheit 133 mit jeder stationären Einheit 111 oder mit einer Teilmenge der stationären Einheiten 111 direkt verbunden ist. Die Ansteuerungselektroniken 123 der stationären Einheiten 111 können dabei insbesondere Datensignale von der Steuereinheit 133 empfangen und anhand dieser Steuersignale die Energiesendespulen 125 ansteuern.

Die stationären Einheiten 111 umfassen ferner optionale stationäre Antennen 129. Die bewegliche Einheit 103 umfasst eine optionale bewegliche Antenne 131. Die bewegliche Antenne 131 ist an der beweglichen Einheit 103 fixiert, kann sich also zusammen mit der beweglichen Einheit 103 entlang der Führungsschiene 105 bewegen. Mittels der stationären Antennen 129 und der beweglichen Antenne 131 können Daten zwischen den stationären Einheiten 111 und der beweglichen Einheit 103 ausgetauscht werden. Alternativ kann eine solche Datenübertragung jedoch auch beispielsweise mittels einer Wireless WLAN- oder Bluetooth- oder einer Infrarotverbindung oder einer 5G-Verbindung oder nach dem DECT-Standard oder als optische Übertragung ausgestaltet sein.

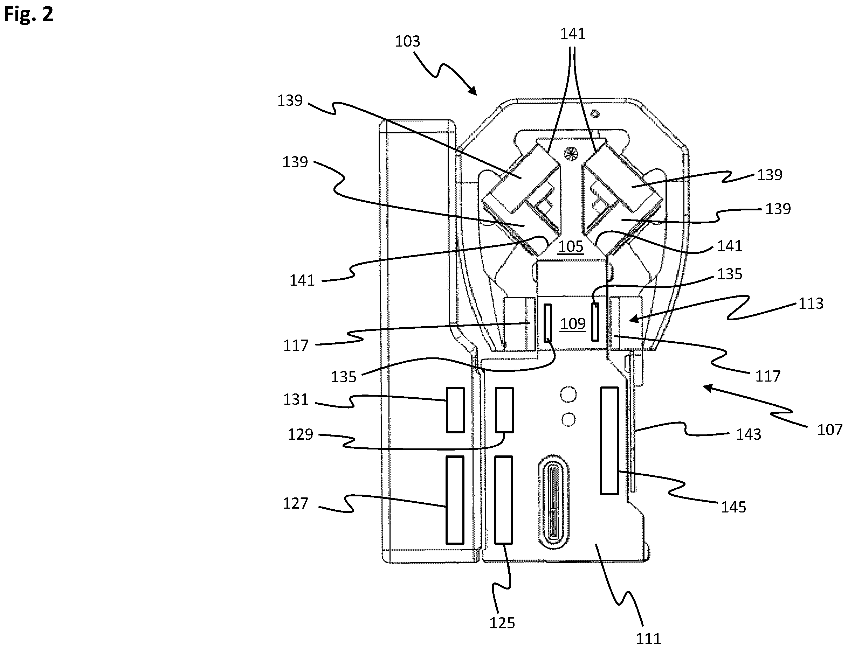

Fig. 2 zeigt eine seitliche Draufsicht auf eine stationäre Einheit 111 inklusive Führungsschiene 105, an der eine bewegliche Einheit 103 angeordnet ist. Die Führung der beweglichen Einheit 103 kann auch mittels alternativen, nicht gezeigten Ausgestaltungen erfolgen. Laufrollen 139 der beweglichen Einheit 103 können auf Laufflächen 141 der Führungsschiene 105 abrollen und so eine im Wesentlichen eindimensionale Bewegung der beweglichen Einheit 103 entlang der Führungsschiene 105 ermöglichen. Ebenfalls in Fig. 2 dargestellt sind Magnete 117 der beweglichen Einheit 103, die den Läufer 113 des Linearmotors 107 bilden. Ferner sind im Bereich des Stators 109 die Antriebsspulen 135 dargestellt. Im Gegensatz zur Darstellung der Fig. 2 kann auch vorgesehen sein, dass die Magnete 117 nur auf einer Seite der Antriebsspule 135 angeordnet sind. Unterhalb der Magnete 117 und des Stators 109 weist die bewegliche Einheit 103 auf einer Seite ein Positionsdetektionselement 143 auf. Die stationäre Einheit 111 weist in diesem Bereich einen Positionssensor 145 auf. Der Positionssensor 145 kann beispielsweise ein durch ein im Positionsdetektionselement 143 eingebettetes Metallstück verändertes Induktionsverhalten einer Spule messen. Hierzu kann der Positionssensor 145 beispielsweise eine bestromte Spule aufweisen, bei der durch eine veränderte Induktivität, hervorgerufen durch ein vorbeifahrendes Positionsdetektionselement 143, zu einer Veränderung des Stroms in der Spule führt und so die Position des Positionsdetektionselements 143 und damit der beweglichen Einheit 103 detektiert werden kann. Selbstverständlich kann der Positionssensor 145 jedoch auch anders ausgestaltet sein, beispielsweise mit jeweils einer Erreger- und Empfangsspule, mit der ebenfalls eine Induktivität des in das Positionsdetektionselement 143 eingebetteten Metallstücks gemessen werden kann. Ferner sind beispielsweise auch in das Positionsdetektionselement 143 eingebettete Magnete oder eine Lichtschrankenauswertung zur Positionsbestimmung denkbar.

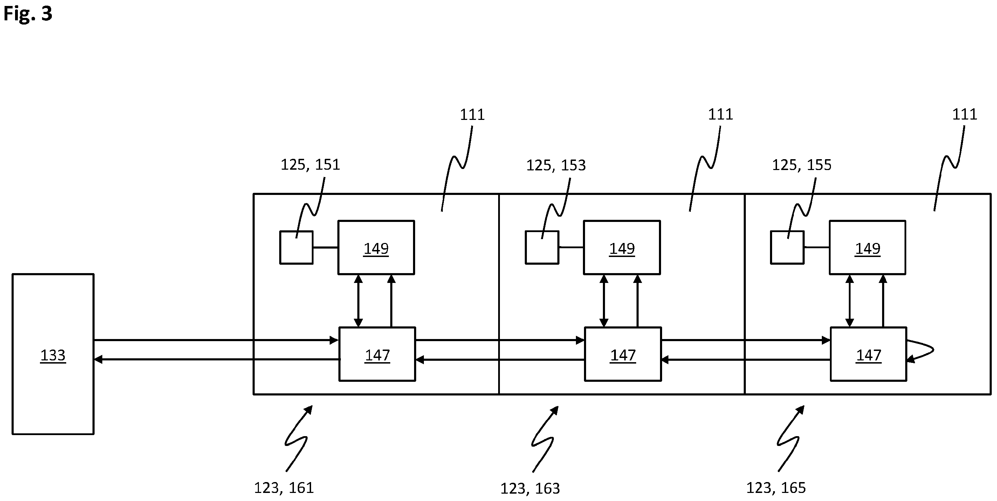

Fig. 3 zeigt eine Datenkommunikation innerhalb eines linearen Transportsystems 101. Es sind drei stationäre Einheiten 111 schematisch dargestellt, wobei jede stationäre Einheit 111 eine Ansteuerungselektronik 123 und eine Energiesendespule 125 aufweist. Die Ansteuerungselektronik 123 dient dabei der Ansteuerung der Energiesendespule 125. Es kann vorgesehen sein, dass jeder stationären Einheit 111 auch mehr als eine Ansteuerungselektronik 123 und mehr als eine Energiesendespule 125 zugeordnet sind, wobei das grundsätzliche Prinzip der Datenübertragung identisch bleibt. Die Ansteuerungselektroniken 123 weisen dabei eine Kommunikationsschnittstelle 147 sowie eine Spulenansteuerung 149 auf. Die stationären Einheiten 111 können ferner in die Spulenansteuerung 149 integrierte oder zusätzlich vorgesehene Ansteuerungselemente zur Ansteuerung der Antriebsspulen 135 aufweisen. Die Spulenansteuerung 149 bezieht sich also gegebenenfalls ausschließlich auf die Ansteuerung der Energiesendespulen 125. In Fig. 3 sind drei stationäre Einheiten 111 dargestellt. Dabei ist insgesamt eine erste Energiesendespule 151 mit einer ersten Ansteuerungselektronik 161, eine zweite Energiesendespule 153 mit einer zweiten Ansteuerungselektronik 163 und eine dritte Energiesendespule 155 mit einer dritten Ansteuerungselektronik 165 vorgesehen. Datensignale von der Steuereinheit 133 können über die Kommunikationsschnittstellen 147 an die Spulenansteuerungen 149 weitergegeben werden. Die Datenkommunikation zwischen der Steuereinheit 133 und den Kommunikationsschnittstellen 147 kann dabei beispielsweise mittels des EtherCAT-Protokolls erfolgen. Die Ansteuerungselektronik 123 kann ferner eingerichtet sein, weitere Elemente der stationären Einheiten 111, wie beispielsweise Antriebsspulen 135 oder das Positionsdetektionselement 143 anzusteuern.

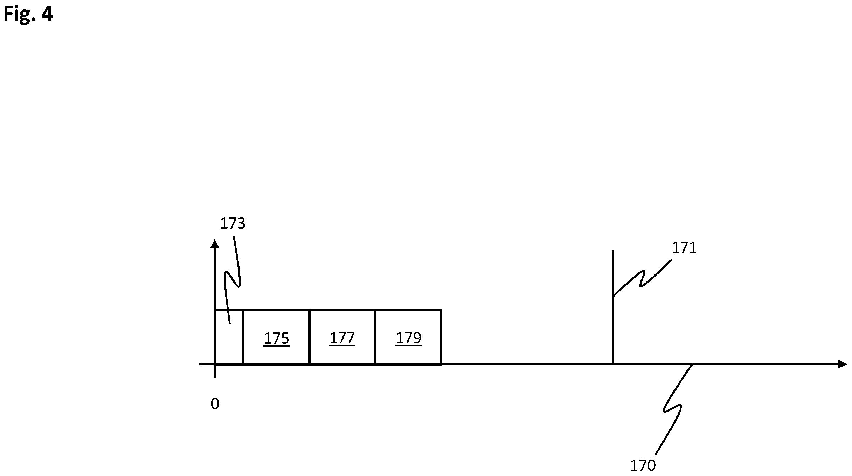

Fig. 4 zeigt einen Datenverlauf einer solchen Datenkommunikation aufgetragen über eine Zeit 170. Es wird ein Header-Frame 173, ein erster Datenframe 175 für die erste Ansteuerungselektronik 161, ein zweiter Datenframe 177 für die zweite Ansteuerungselektronik 163 und ein dritter Datenframe 179 für die dritte Ansteuerungselektronik 165 ausgegeben. Ferner kann ein Unterbrechungssignal 171 ausgegeben werden, mittels dem alle Ansteuerungselektroniken 123 synchronisiert werden können. Das Unterbrechungssignal 171 kann beispielsweise dazu dienen, jeweils eine PLL der ersten Ansteuerungselektronik 161, der zweiten Ansteuerungselektronik 163 und der dritten Ansteuerungselektronik 165 zu betreiben.

Um die Energiesendespulen 125 anzusteuern, können die Ansteuerungselektroniken 123 folgende Schritte ausführen. Zunächst kann ein Energiemengensignal für die betreffende Energiesendespule 125 eingelesen werden. Dieses Energiemengensignal kann beispielsweise von der Steuereinheit 133 zur Verfügung gestellt werden. Das Energiemengensignal wird dann von der Ansteuerungselektronik 123 in ein Puls-Pausen-Verhältnis umgesetzt und die Energiesendespule 125 anhand des Puls-Pausen-Verhältnisses angesteuert. Das Puls-Pausen-Verhältnis kann dabei beispielsweise mittels einer Uhr oder mittels der Auswertung einer vorgegebenen Schwingung, beispielsweise in einem Schwingkreis erfolgen.

In einem Ausführungsbeispiel wird in der Ansteuerungselektronik 123, insbesondere in der Spulenansteuerung 149, ein Zähler gestartet und die Umsetzung des Energiemengensignals in das Puls-Pausen-Verhältnis erfolgt mittels des Zählers.

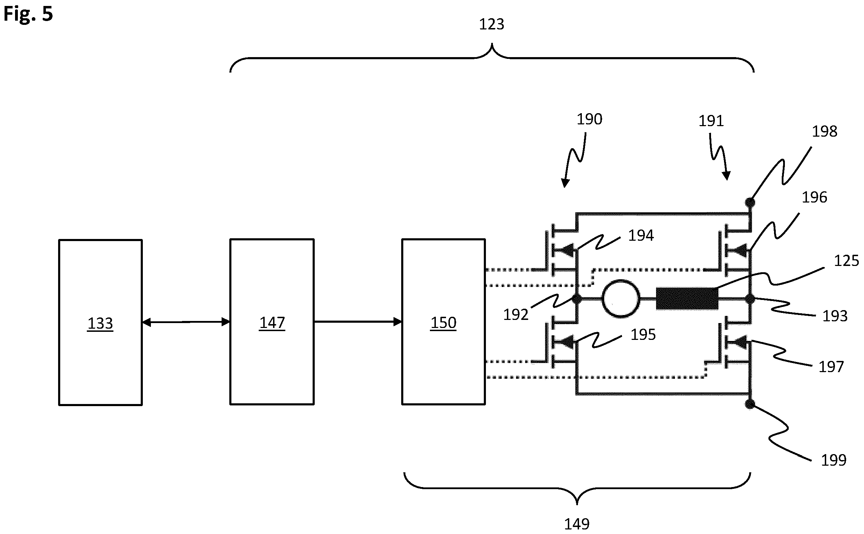

Fig. 5 zeigt schematisch, wie die Energiesendespulen 125 elektronisch angesteuert werden können. Ein von der Steuereinheit 133 ausgehendes Datensignal wird von der Ansteuerungselektronik 123 verarbeitet. Insbesondere wird das Datensignal von der Kommunikationsschnittstelle 147 aufgenommen und an die Spulenansteuerung 149 weitergegeben. Die Spulenansteuerung 149 umfasst dabei einen Treiber 150 sowie eine erste Halbbrücke 190 und eine zweite Halbbrücke 191. Die erste Halbbrücke 190 umfasst einen ersten Halbbrückenmittelpunkt 192, die zweite Halbbrücke 191 umfasst einen zweiten Halbbrückenmittelpunkt 193. Zwischen dem ersten Halbbrückenmittelpunkt 192 und dem zweiten Halbbrückenmittelpunkt 193 ist die Energiesendespule 125 angeordnet. Die erste Halbbrücke 190 umfasst ferner einen ersten Schalter 194 und einen zweiten Schalter 195, wobei zwischen dem ersten Schalter 194 und dem zweiten Schalter 195 der erste Halbbrückenmittelpunkt 192 angeordnet ist. Die zweite Halbbrücke 191 umfasst einen dritten Schalter 196 und einen vierten Schalter 197, wobei der zweite Halbbrückenmittelpunkt 193 zwischen dem dritten Schalter 196 und dem vierten Schalter 197 angeordnet ist. Ferner kann, wie in Fig. 5 dargestellt, der erste Schalter 194 und der dritte Schalter 196 mit einem Potential 198 verbunden sein, während der zweite Schalter 195 und der vierte Schalter 197 mit einem gemeinsamen Massepunkt 199 verbunden sind. Je nach Stellung der ersten bis vierten Schalter 194, 195, 196, 197 kann ein Strom durch die Energiesendespule 125 fließen. Insbesondere werden von der Spulenansteuerung 149 der erste Schalter 194 und der vierte Schalter 197 oder der zweite Schalter 195 und der dritte Schalter 196 gleichzeitig leitend geschaltet, um so einen Strom vorwärts oder rückwärts durch die Energiesendespule 125 zu leiten.

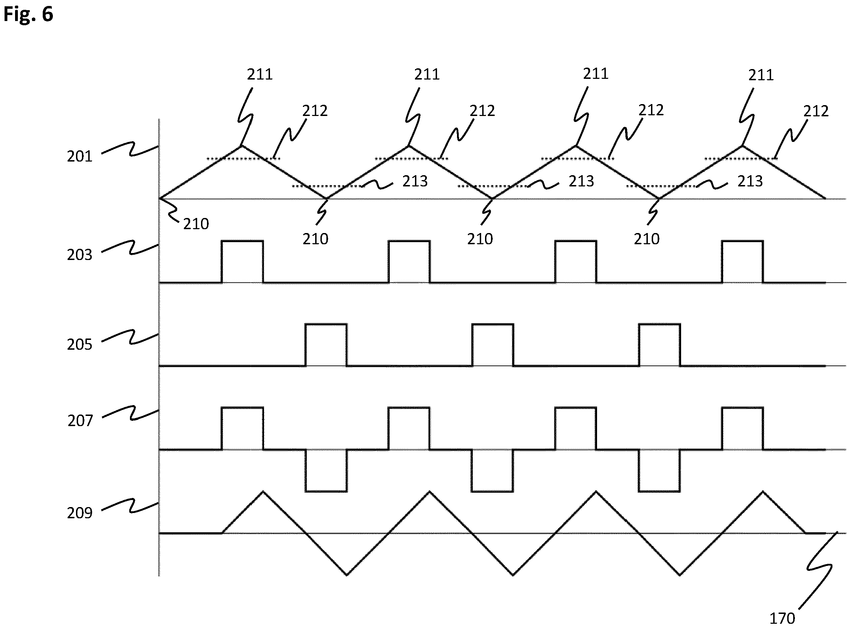

Fig. 6 zeigt Verfahrensabläufe für einen Zähler 201, einen ersten Schaltsignalverlauf 203 des ersten Schalters 194 und des vierten Schalters 197, einen zweiten Schaltsignalverlauf 205 des zweiten Schalters 195 und des dritten Schalters 196, eine aus dem ersten Schaltsignalverlauf 203 und dem zweiten Schaltsignalverlauf 205 resultierende angelegte Spulenspannung 207 sowie einen Spulenstrom 209, jeweils aufgetragen über die Zeit 170. Der Spulenstrom 209 ist dabei ideal und ohne weitere Verluste dargestellt. Der Zähler 201 zählt jeweils von einem Minimalwert 210 bis zu einem Maximalwert 211 nach oben und anschließend vom Maximalwert 211 wieder zum Minimalwert 210 nach unten. Das von der Steuereinheit 133 übertragene Energiemengensignal wird mit einem oberen Zählerwert 212 und einem unteren Zählerwert 213 verknüpft. Liegt der Zähler 201 oberhalb des oberen Zählerwertes 212, so werden der erste Schalter 194 und der vierte Schalter 197 leitend geschaltet, was dem ersten Schaltsignalverlauf 203 zu entnehmen ist. Liegt der Zähler 201 unter dem unteren Zählerwert 213, so werden der zweite Schalter 195 und der dritte Schalter 196 leitend geschaltet, was dem zweiten Schaltsignalverlauf 205 zu entnehmen ist. Da aufgrund der Ansteuerung mittels der ersten Halbbrücke 190 und der zweiten Halbbrücke 191 die an der Energiesendespule 125 anliegende Spannung jeweils umgedreht wird, ergibt sich der Verlauf der angelegten Spulenspannung 207. Aus dieser angelegten Spulenspannung 207 ergibt sich der ideale Spulenstrom 209. Fig. 6 zeigt dabei die maximal mögliche Ansteuerung mit angelegter Spulenspannung 207 zu 50 Prozent der Zeit.

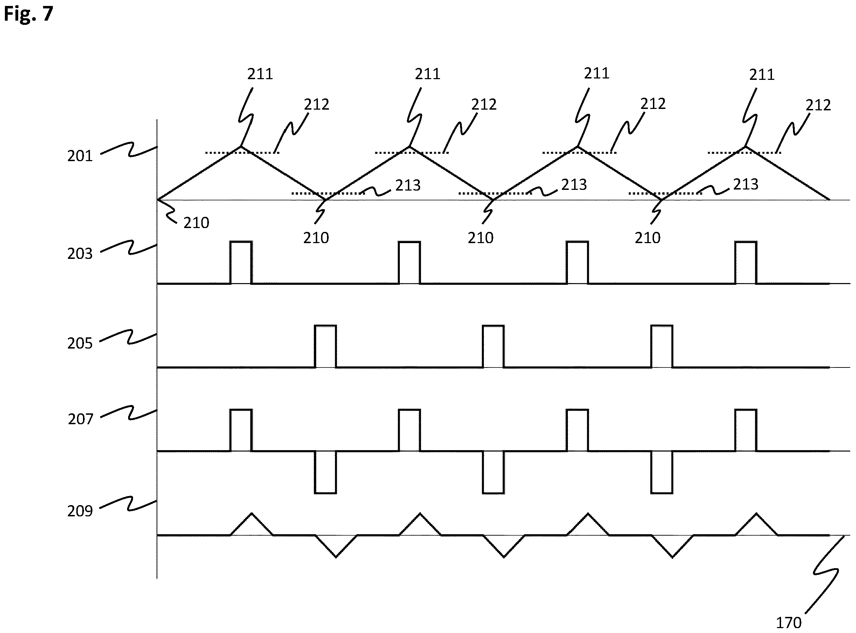

Fig. 7 zeigt einen Verlauf des Zählers 201, des ersten Schaltsignalverlaufs 203, des zweiten Schaltsignalverlaufs 205, der Spulenspannung 207 und des Spulenstroms 209 für den Fall, dass der obere Zählerwert 212 erhöht und der untere Zählerwert 213 erniedrigt wird. In diesem Fall wird eine Leistung mittels der Energiesendespule 125 übertragen, die kleiner als die Leistung der in Fig. 6 dargestellten Energieübertragung ist, was insbesondere durch die verkürzten Schaltpulse der angelegten Spulenspannung 207 verursacht wird und zu einem kleineren effektiven Spulenstrom 209 führt.

In einem Ausführungsbeispiel soll eine Nennleistung übertagen werden. Dann kann der obere Zählerwert 212 größer als drei Viertel einer Differenz aus Maximalwert 211 und Minimalwert 210 zuzüglich des Minimalwerts 210 sein. Der untere Zählerwert 213 kann kleiner als ein Viertel der Differenz aus Maximalwert 211 und Minimalwert 210 zuzüglich des Minimalwerts 210 sein. Insbesondere kann vorgesehen sein, dass der obere Zählerwert 212 mindestens sieben Achtel der Differenz aus Maximalwert 211 und Minimalwert 210 zuzüglich des Minimalwerts 210 ist und der untere Zählerwert 213 maximal ein Achtel der Differenz aus Maximalwert 211 und Minimalwert 210 zuzüglich des Minimalwerts 210 ist.

Um eine die Nennleistung übersteigende Spitzenleistung zu übertragen, beträgt der obere Zählerwert 212 mindestens drei Viertel der Differenz aus Maximalwert 211 und Minimalwert 210 zuzüglich des Minimalwerts 210 und der untere Zählerwert 213 höchstens ein Viertel der Differenz aus Maximalwert 211 und Minimalwert 210 zuzüglich des Minimalwerts 210. Dies ist der in Fig. 6 dargestellte Fall, bei dem im Verlauf der angelegten Spulenspannung 207 jeweils zwischen den Spannungspulsen identische Zeitabstände ohne Spannung vorliegen. In diesem Fall ergibt sich ein großer Effektivwert des Spulenstroms 209 und damit eine größtmögliche Energieübertragung. Insbesondere kann vorgesehen sein, dass für die Übertragung der Nennleistung der obere Zählerwert 212 mindestens sieben Achtel der Differenz aus Maximalwert 211 und Minimalwert 210 zuzüglich des Minimalwerts 210 ist und der untere Zählerwert 213 maximal ein Achtel der Differenz aus Maximalwert 211 und Minimalwert 210 zuzüglich des Minimalwerts 210 ist und für die Übertragung der Spitzenleistung der obere Zählerwert 212 genau drei Viertel der Differenz aus Maximalwert 211 und Minimalwert 210 zuzüglich des Minimalwerts 210 und der untere Zählerwert 213 genau ein Viertel der Differenz aus Maximalwert 211 und Minimalwert 210 zuzüglich des Minimalwerts 210 ist. Soll eine die Nennleistung übersteigende Leistung übertragen werden, die kleiner als die Spitzenleistung ist, ist der obere Zählerwert 212 größer als drei Viertel der Differenz aus Maximalwert 211 und Minimalwert 210 zuzüglich des Minimalwerts 210 und kleiner als sieben Achtel der Differenz aus Maximalwert 211 und Minimalwert 210 zuzüglich des Minimalwerts 210 und der untere Zählerwert 213 kleiner als ein Viertel der Differenz aus Maximalwert 211 und Minimalwert 210 zuzüglich des Minimalwerts 210 und größer als ein Achtel der Differenz aus Maximalwert 211 und Minimalwert 210 zuzüglich des Minimalwerts 210.

Um die zugrundeliegenden Gleichungen zu vereinfachen, kann es vorgesehen sein, dass der Minimalwert 210 als Null definiert wird und der Zähler von Null zum Maximalwert 211 zählt.

Die die Nennleistung übersteigende Spitzenleistung kann insbesondere dazu dienen, eine kurzfristig benötigte höhere Leistung zu übertragen, wobei die Nennleistung einer maximalen, im Dauerbetrieb übertragbaren Leistung entspricht. Die Nennleistung kann beispielsweise maximal 250 Watt entsprechen, die Spitzenleistung 500 Watt. Insbesondere kann die Nennleistung maximal 125 Watt betragen, die Spitzenleistung 250 Watt. Ferner kann vorgesehen sein, dass die Nennleistung zwischen 10 und 50 Watt, insbesondere 30 Watt, beträgt. Die Spitzenleistung kann dann zwischen 50 und 90 Watt, insbesondere 70 Watt sein.

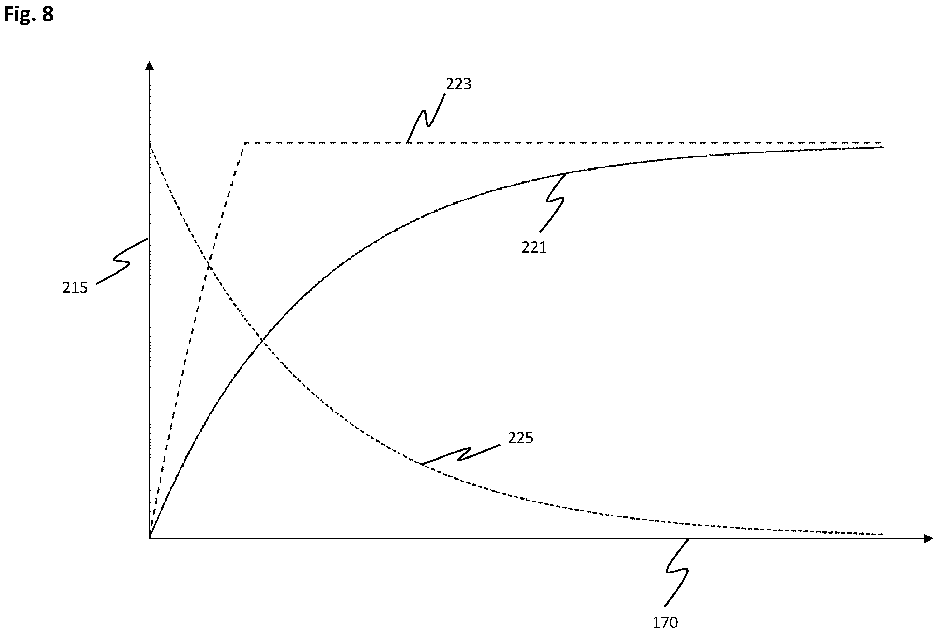

Fig. 8 zeigt einen Temperatur 215 aufgetragen über eine Zeit 170 für verschiedene Schaltzustände. Die Temperatur 215 kann dabei insbesondere eine Oberflächentemperatur der stationären Einheit 111 beziehungsweise des Gehäuses der stationären Einheit 111 oder die Temperatur des Bauteils der stationären Einheit 111 sein, welches am temperaturempfindlichsten ist, sein. Ein erster Temperaturverlauf 221 entspricht einer Übertragung der Nennleistung, wenn die Energieübertragung eingeschaltet wird.

Es folgt ein exponentieller Anstieg der Temperatur, der sich asymptotisch einem Maximalwert, der einer maximalen Temperatur entspricht, bei der die Energieübertragung noch ausfallsicher betrieben werden kann, annähert. Die Maximaltemperatur kann sich dabei aus Normen ergeben, nach denen elektrische Geräte eine bestimmte Temperatur an einer berührbaren Oberfläche wie beispielsweise 105 Grad Celsius nicht überschreiten dürfen, oder aus vorgegebenen Betriebstemperaturen von Komponenten der stationären Einheiten 111. Ein zweiter Temperaturverlauf 223 stellt eine erhöhte Temperatur dar, bei dem zunächst eine Spitzenleistung übertragen wird und anschließend auf die Nennlast reduziert wird, wenn die Maximaltemperatur erreicht ist. Ein dritter Temperaturverlauf 225 entspricht der Beendigung der Energieübertragung, wenn die Energiesendespule 125 wieder spannungsfrei geschaltet wird, wenn vorher der maximale Temperaturwert erreicht war.

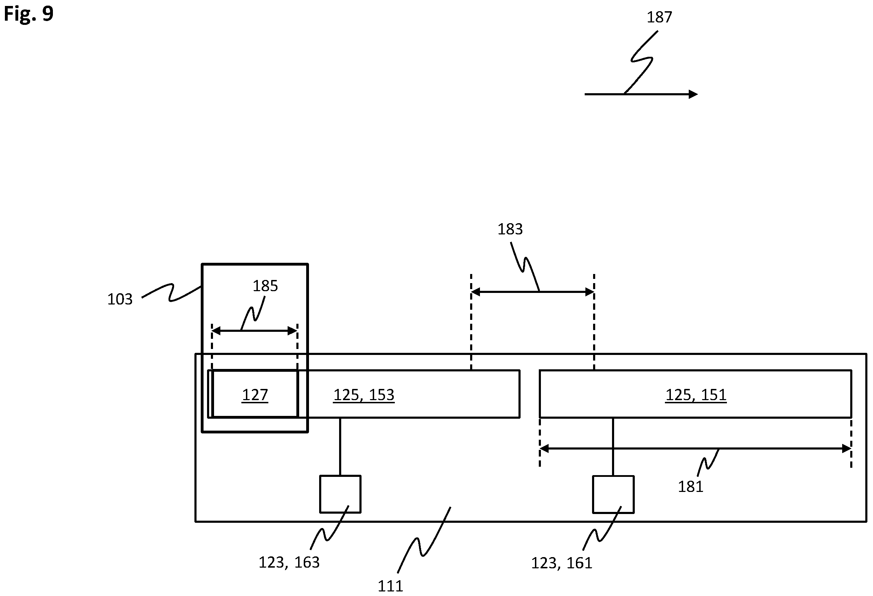

Fig. 9 zeigt eine schematische Ansicht einer stationären Einheit 111, wobei die stationäre Einheit 111 in dieser Ausgestaltung eine erste Energiesendespule 151 und eine zweite Energiesendespule 153 umfasst. Die stationäre Einheit 111 umfasst ferner eine erste Ansteuerungselektronik 161 zur Ansteuerung der ersten Energiesendespule 151 und eine zweite Ansteuerungselektronik 163 zur Ansteuerung der zweiten Energiesendespule 153. Die erste Ansteuerungselektronik 161 und die zweite Ansteuerungselektronik 163 können dabei den oben beschrieben Ansteuerungselektroniken 123 entsprechen. Es ist ferner eine bewegliche Einheit 103 mit einer Energieempfangsspule 127 dargestellt. Ergeben die Positionsdaten der Energieempfangsspule 127, die den Positionsdaten der beweglichen Einheit 103 entsprechen können, dass sich die Energieempfangsspule 127 von der ersten Energiesendespule 151 zur zweiten Energiesendespule 153 bewegt und sind die erste Ansteuerungselektronik 161 und die zweite Ansteuerungselektronik 163 anhand des Unterbrechungssignal 171 synchronisiert, wird dies in der ersten Ansteuerungselektronik 161 und der zweiten Ansteuerungselektronik 163 dadurch umgesetzt, dass für die erste Ansteuerungselektronik 161 und die zweite Ansteuerungselektronik 163 die jeweiligen Zähler 201 gleichzeitig gestartet werden (in den Figuren 6 und 7 jeweils für einen Zähler 201 dargestellt). Das Energiemengensignal wird sowohl an die erste Ansteuerungselektronik 161 als auch an die zweite Ansteuerungselektronik 163 ausgegeben und jeweils mit dem oberen Zählerwert 212 und dem unteren Zählerwert 213 verknüpft, wobei diese Verknüpfung für die erste Ansteuerungselektronik 161 und die zweite Ansteuerungselektronik 163 identisch ist. Der erste Schaltverlauf 203 und der zweite Schaltverlauf 205 sind dann sowohl für die erste Energiesendespule 151 als auch für die zweite Energiesendespule 153 identisch und können analog zu den Figuren 6 und 7 ausgestaltet sein. Die erste Energiesendespule 151 und die zweite Energiesendespule 153 sind dann mit einem synchronen Strom beaufschlagt. Wird nun die bewegliche Einheit 103 von der ersten Energiesendespule 151 zur zweiten Energiesendespule 153 bewegt, so ergibt sich durch die synchrone Bestromung der ersten Energiesendespule 151 und der zweiten Energiesendespule 153 ein möglichst geringer Störeinfluss dadurch, dass sich die bewegliche Einheit 103 von der ersten Energiesendespule 151 zur zweiten Energiesendespule 153 bewegt. Die magnetischen Felder der ersten Energiesendespule 151 und der zweiten Energiesendespule 153 überlagern sich dann zeitlich ideal. Dadurch empfängt die Energieempfangsspule 127 eine Summe der beiden Felder. Wenn die beiden magnetischen Felder der ersten Energiesendespule 151 und der zweiten Energiesendespule 153 nicht synchron sind, sondern beispielsweise zeitlich verschoben wären, könnten sie sich gegenseitig stören oder die Summe der beiden Felder wäre geringer, beispielsweise wenn das eine Feld noch positiv wäre und das andere bereits negativ.

Ferner kann in diesem Ausführungsbeispiel vorgesehen sein, wie bereits beschrieben, den oberen Zählerwert 212 zu verringern und den unteren Zählerwert 213 zu erhöhen, wenn die Energieempfangsspule 127 zwischen der ersten Energiesendespule 151 und der zweiten Energiesendespule 153 angeordnet ist, da in einem Zwischenraum zwischen der ersten Energiesendespule 151 und der zweiten Energiesendespule 153 ein verminderter magnetischer Fluss die Energieempfangsspule 127 trifft und dieser verminderte Fluss durch die erhöhte Bestromung der ersten Energiesendespule 151 und der zweiten Energiesendespule 153 ausgeglichen werden kann. Dabei kann vorgesehen sein, dass eine erste Länge 181 der Energiesendespulen 125 größer ist als eine zweite Länge 183 eines Übergangsbereichs und die zweite Länge 183 größer ist als eine dritte Länge 185 der Energieempfangsspule 127. Die erste Länge 181, die zweite Länge 183 und die dritte Länge 185 beziehen sich dabei auf eine Fahrtrichtung 187 entlang der Führungsschiene 105.

Ferner kann vorgesehen sein, dass eine thermische Belastung der Energieübertragung bestimmt und eine Abkühlzeit berechnet wird. Eine erneute Reduzierung des oberen Zählerwerts 212 und eine erneute Erhöhung des unteren Zählerwerts 213 erfolgt dann erst nach der Abkühlzeit. So kann erreicht werden, dass insgesamt eine thermische Belastung der Energieübertragung kontrolliert und kleiner als eine thermische Maximalbelastung gehalten werden kann. Es kann ferner vorgesehen sein, die Bestromung der Antriebspulen 135 so zu verändern, dass sich die bewegliche Einheit 103 schneller bewegt, während sich die bewegliche Einheit 103 von der ersten Energiesendespule 151 zur zweiten Energiesendespule 153 bewegt, um den Antriebsstrom zu reduzieren, wenn sich die bewegliche Einheit 103 im Bereich der ersten Energiesendespule 151 oder der zweiten Energiesendespule 153 aufhält. Dadurch kann eine Durchschnittsgeschwindigkeit der beweglichen Einheit 103 konstant gehalten werden und die bewegliche Einheit 103 im Bereich des Übergangs zwischen der ersten Energiesendespule 151 und der zweiten Energiesendespule 153 schneller bewegt werden, um die thermische Belastung des Systems weiter zu reduzieren. Dabei kann insbesondere eine Erhöhungszeitdauer, während der der Strom durch die Antriebsspulen 135 erhöht wird, aus einer Geschwindigkeit der beweglichen Einheit 103 berechnet werden.

Es kann ferner vorgesehen sein, den oberen Zählerwert 212 und den unteren Zählerwert 213 anhand einer im Bereich der Energiesendespulen 125 gemessenen Temperatur anzupassen. Durch die Anpassung kann insbesondere die thermische Belastung der Energieübertragung reduziert werden, zu Lasten einer erhöhten thermischen Belastung der Antriebsspulen 135. In vielen Betriebsfällen steht bei den Antriebsspulen 135 jedoch eine größere thermische Reserve zur Verfügung.

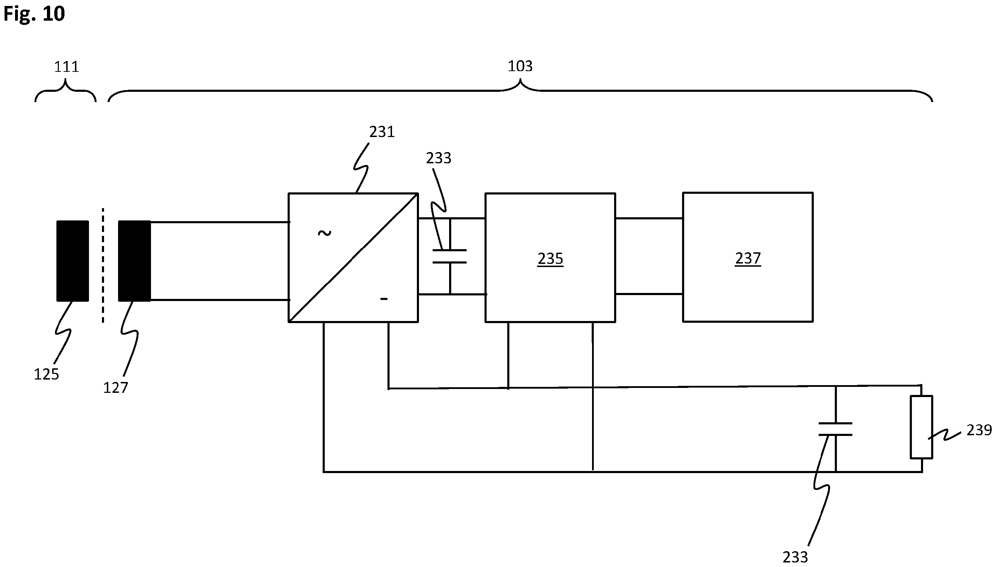

Fig. 10 zeigt eine elektrische Schaltung der beweglichen Einheit 103. Der mittels der Energieempfangsspule 127 übertragene Strom kann mittels eines Gleichrichters 231 gleichgerichtet und anschließend mittels eines Kondensators 233 geglättet werden. Ferner ist eine Ladesteuerung 235 für einen Akkumulator 237 vorgesehen, wobei die Ladesteuerung 235 das Laden bzw. Entladen des Akkumulators 237 steuert. Ferner kann eine Last 239, also beispielsweise ein Elektromotor oder ein anderes Werkzeug, als Stromverbraucher dienen. Ein Kondensator 233 kann auch im Bereich der Last 239 angeordnet sein. Insbesondere kann auch nur einer der beiden Kondensatoren 233 vorgesehen sein und der Kondensator 233 parallel zur Energieempfangsspule 127 geschaltet sein.

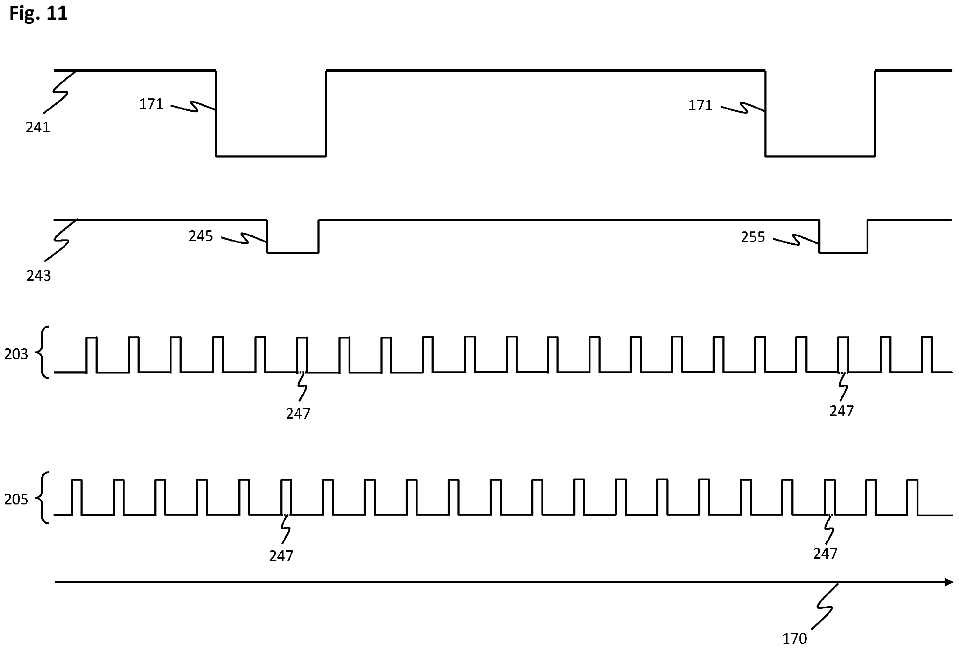

Fig. 11 zeigt ein Synchronisationssignal 241, ein Datenübertragungssignal 243 sowie den ersten Schaltsignalverlauf 203 und den zweiten Schaltsignalverlauf 205. Das Synchronisationssignal 241 kann dabei ein Unterbrechungssignal 171 umfassen, ab dem die Zähler 201 der Ansteuerungselektroniken 123 jeweils gestartet werden. Das Datenübertragungssignal 243 kann eine Datenübertragungsflanke 245 umfassen, wobei bei der Datenübertragungsflanke 245 beispielsweise eine Datenübertragung mittels der stationären Antenne 129 und der beweglichen Antenne 131 ausgelöst werden kann. Für den Fall, das die Datenübertragung kritisch ist, kann vorgesehen sein, dass im ersten Schaltsignalverlauf 203 und im zweiten Schaltsignalverlauf 205 ausgelassene Schaltpulse 247 vorgesehen sind, die direkt im Anschluss an die Datenübertragungsflanke 245 erfolgen. Dies ist im ersten Schaltsignalverlauf 203 und im zweiten Schaltsignalverlauf 205 durch gepunktete Linien dargestellt, wobei der mit gepunkteter Linie dargestellte Schaltpuls 247 jeweils ausgelassen werden kann. Dies bedeutet, dass zwar nach dem Zähler 201 bzw. den oberen Zählerwert 212 und dem unteren Zählerwert 213 die Energiesendespule 125 mit Spannung versorgt werden sollte, aufgrund der Datenübertragung jedoch keine Energieübertragung erfolgt, um die Datenübertragung zu sichern. Kritische Datenübertragungen können dabei insbesondere sicherheitskritische Datenübertragungen umfassen.

Es kann ferner vorgesehen sein, Positionsdaten der Energieempfangsspulen 127 der beweglichen Einheit 103 zu ermitteln, beispielsweise mittels des Positionsdetektionselements 143 und des Positionssensors 145. Anschließend wird die Energiesendespule 125 innerhalb des linearen Transportsystems 101 ausgewählt, die der Energieempfangsspule 127 am nächsten liegt. Es wird also die Energiesendespule 125 anhand der Positionsdaten ausgewählt. Anschließend wird das Energiemengensignal an die Ansteuerungselektronik 123 der ausgewählten Energiesendespule 125 ausgegeben.

### Bezugszeichenliste

- 101: Transportsystem
- 103: bewegliche Einheit
- 105: Führungsschiene
- 107: Linearmotor
- 109: Stator
- 111: stationäre Einheit
- 113: Läufer
- 117: Magnet
- 123: Ansteuerungselektronik
- 125: Energiesendespule
- 126: erster Spulenteil
- 127: Energieempfangsspule
- 128: zweiter Spulenteil
- 129: stationäre Antenne
- 131: bewegliche Antenne
- 133: Steuereinheit
- 135: Antriebsspule
- 137: Werkzeug
- 139: Laufrolle
- 141: Lauffläche
- 143: Positionsdetektionselement
- 145: Positionssensor
- 147: Kommunikationsschnittstelle
- 149: Spulenansteuerung
- 150: Treiber
- 151: erste Energiesendespule
- 153: zweite Energiesendespule
- 155: dritte Energiesendespule
- 161: erste Ansteuerungselektronik
- 163: zweite Ansteuerungselektronik
- 165: dritte Ansteuerungselektronik
- 170: Zeit
- 171: Unterbrechungssignal
- 173: Header-Frame
- 175: erster Datenframe
- 177: zweiter Datenframe
- 179: dritter Datenframe
- 181: erste Länge
- 183: zweite Länge
- 185: dritte Länge
- 187: Fahrtrichtung
- 190: erste Halbbrücke
- 191: zweite Halbbrücke
- 192: erster Halbbrückenmittelpunk
- 193: zweiter Halbbrückenmittelpunkt
- 194: erster Schalter
- 195: zweiter Schalter
- 196: dritter Schalter
- 197: vierter Schalter
- 198: Potential
- 199: gemeinsamer Massepunkt
- 201: Zähler
- 203: erster Schaltsignalverlauf
- 205: zweiter Schaltsignalverlauf
- 207: Spulenspannung
- 209: Spulenstrom
- 210: Minimalwert
- 211: Maximalwert
- 212: oberer Zählerwert
- 213: unterer Zählerwert
- 215: Temperaturverlauf
- 221: erster Temperaturverlauf
- 223: zweiter Temperaturverlauf
- 225: dritter Temperaturverlauf
- 231: Gleichrichter
- 233: Kondensator
- 235: Ladesteuerung
- 237: Akkumulator
- 239: Last
- 241: Synchronisationssignal
- 243: Datenübertragungssignal
- 245: Datenübertragungsflanke
- 247: Schaltpuls

## Patentansprüche

1. Verfahren zum Übertragen von Energie von einer stationären Einheit (111) zu einer beweglichen Einheit (103) eines linearen Transportsystems (101), wobei das lineare Transportsystem (101) eine Führungsschiene (105) zum Führen der beweglichen Einheit (103), mehrere stationäre Einheiten (111), eine Steuereinheit (133) sowie einen Linearmotor (107) zum Antreiben der beweglichen Einheit (103) entlang der Führungsschiene (105) aufweist, wobei der Linearmotor (107) einen Stator (109) und einen Läufer (113) umfasst, wobei der Stator (109) die stationären Einheiten (111) umfasst, welche jeweils eine oder mehrere Antriebsspulen (135) umfassen, wobei der Läufer (113) an der beweglichen Einheit (103) angeordnet ist und einen oder mehrere Magnete (117) umfasst, wobei die stationären Einheiten (111) jeweils eine oder mehrere Energiesendespulen (125) umfassen, wobei jede Energiesendespule (125) eine Ansteuerungselektronik (123) aufweist,
**dadurch gekennzeichnet, dass**
die bewegliche Einheit (103) mindestens eine Energieempfangsspule (127) umfasst, wobei die Steuereinheit (133) folgende Schritte ausgeführt:
- Ermitteln von Positionsdaten der Energieempfangsspule (127) der beweglichen Einheit (103),
- Auswählen von Energiesendespulen (125) der stationären Einheiten (111) anhand der Positionsdaten der Energieempfangsspule (127) der beweglichen Einheit (103), und
- Ausgeben eines Energiemengensignals an die Ansteuerungselektroniken (123) der ausgewählten Energiesendespulen (125),
wobei die Ansteuerungselektroniken (123) der ausgewählten Energiesendespulen (125) folgende Schritte ausführen:
- Einlesen des Energiemengensignals für die betreffende Energiesendespule (125)
- Umsetzen des Energiemengensignals in ein Puls-Pausen-Verhältnis zur Ansteuerung der Energiesendespule (125) mittels Zähler (201), und
- Ansteuern der Energiesendespule (125) anhand des Puls-Pausen-Verhältnisses um einen Strom durch die Energiesendespule (125) zu steuern,
wobei, wenn die von der Steuereinheit (133) ermittelten Positionsdaten der Energieempfangsspule (127) der beweglichen Einheit (103) ergeben, dass sich die Energieempfangsspule (127) der beweglichen Einheit (103) von einer ersten Energiesendespule (151) zu einer zweiten Energiesendespule (153) bewegt, das Energiemengensignal an eine erste Ansteuerungselektronik (161) der ersten Energiesendespule (151) und eine zweite Ansteuerungselektronik (163) der zweiten Energiesendespule (153) ausgegeben wird und die erste Ansteuerungselektronik (161) der ersten Energiesendespule (151) und die zweite Ansteuerungselektronik (163) der zweiten Energiesendespule (153) jeweils anhand eines Synchronisationssignals (241) der Steuereinheit (133) synchronisiert werden, wobei ein erster Zähler der ersten Ansteuerungselektronik (151) und ein zweiter Zähler der zweiten Ansteuerungselektronik (161) anhand des Synchronisationssignals (241) gleichzeitig gestartet werden.

2. Verfahren nach Anspruch 1, wobei die Ansteuerungselektronik (123) zumindest eine erste Halbbrücke (190) mit einem ersten Schalter (194) und einem zweiten Schalter (195) und eine zweite Halbbrücke (191) mit einem dritten Schalter (196) und einem vierten Schalter (197) aufweist, wobei die Energiesendespule (125) zwischen einem ersten Halbbrückenmittelpunkt (192) und einem zweiten Halbbrückenmittelpunkt (193) angeordnet ist, wobei der erste Halbbrückenmittelpunkt (192) zwischen dem ersten Schalter (194) und dem zweiten Schalter (195) angeordnet ist, wobei der zweite Halbbrückenmittelpunkt (193) zwischen dem dritten Schalter (196) und dem vierten Schalter (197) angeordnet ist, wobei der Zähler (201) jeweils von einem Minimalwert (210) bis zu einem Maximalwert (211) nach oben zählt und anschließend vom Maximalwert (211) zum Minimalwert (210) nach unten zählt, wobei das Energiemengensignal mit einem oberen Zählerwert (212) und einem unteren Zählerwert (213) verknüpft wird, wobei der erste Schalter (194) und der vierte Schalter (197) leitend geschalten werden, wenn der Zähler (201) oberhalb des oberen Zählerwertes (212) liegt, und der zweite Schalter (195) und der dritte Schalter (196) leitend geschalten werden, wenn der Zähler (201) unterhalb des unteren Zählerwertes (213) liegt.

3. Verfahren nach Anspruch 2, wobei der obere Zählerwert (212) größer ist als drei Viertel einer Differenz aus Maximalwert (211) und Minimalwert (210) zuzüglich des Minimalwerts (210) und der untere Zählerwert (213) kleiner ist als ein Viertel der Differenz aus Maximalwert (211) und Minimalwert (210) zuzüglich des Minimalwerts (210), wenn eine Nennleistung übertragen werden soll.

4. Verfahren nach Anspruch 3, wobei für die Übertragung der Nennleistung der obere Zählerwert (212) mindestens sieben Achtel der Differenz aus Maximalwert (211) und Minimalwert (210) zuzüglich des Minimalwerts (210) ist und der untere Zählerwert (213) maximal ein Achtel der Differenz aus Maximalwert (211) und Minimalwert (210) zuzüglich des Minimalwerts (210) ist.

5. Verfahren nach Anspruch 3 oder 4, wobei zum Übertragen einer die Nennleistung übersteigenden Spitzenleistung der obere Zählerwert (212) mindestens drei Viertel der Differenz aus Maximalwert (211) und Minimalwert (210) zuzüglich des Minimalwerts (210) beträgt und der untere Zählerwert (213) höchstens ein Viertel der Differenz aus Maximalwert (211) und Minimalwert (210) zuzüglich des Minimalwerts (210) beträgt.

6. Verfahren nach einem der Ansprüche 2 bis 5, wobei ferner ein Datenübertragungssignal (243) von der Ansteuerungselektronik (123) eingelesen wird, wobei das Datenübertragungssignal (243) beinhaltet, dass im Bereich der Energiesendespule (125) eine Datenübertragung stattfindet, wobei zumindest einmal, wenn der Zähler (201) oberhalb des oberen Zählerwertes (212) liegt, der erste Schalter (194) und der vierte Schalter (197) nicht-leitend geschaltet werden und zumindest einmal, wenn der Zähler (201) unterhalb des unteren Zählerwertes (213) liegt, der zweite Schalter (195) und der dritte Schalter (196) nicht-leitend geschaltet werden.

7. Verfahren nach einem der Ansprüche 2 bis 6, wobei, wenn die Positionsdaten ergeben, dass die Energieempfangsspule (127) zwischen der ersten Energiesendespule (151) und der zweiten Energiesendespule (152) angeordnet ist, der obere Zählerwert (212) reduziert und der untere Zählerwert (213) erhöht wird.

8. Verfahren nach Anspruch 7, wobei für den Fall, dass eine Leistung übertragen werden soll, die größer ist als die Nennleistung, eine thermische Belastung der Energieübertragung bestimmt wird und eine Abkühlzeit berechnet wird, wobei eine erneute Reduzierung des oberen Zählerwerts (212) und eine erneute Erhöhung des unteren Zählerwerts (213) derart, dass eine Leistung größer als die Nennleistung übertragen werden kann, erst nach der Abkühlzeit erfolgt.

9. Verfahren nach Anspruch 7 oder 8, wobei eine Bestromung der Antriebsspulen (135) derart verändert wird, dass sich die bewegliche Einheit (103) schneller bewegt.

10. Verfahren nach Anspruch 9, wobei eine Erhöhungszeitdauer, während der die Bestromung der Antriebsspulen (135) verändert wird, aus einer Geschwindigkeit der beweglichen Einheit (103) berechnet wird.

11. Verfahren nach einem der Ansprüche 2 bis 10, wobei der obere Zählerwert (212) und der untere Zählerwert (213) anhand einer im Bereich der Energiesendespule (125) gemessenen Temperatur angepasst werden.

12. Lineares Transportsystem (101) mit zumindest einer stationären Einheit (111) und zumindest einer beweglichen Einheit (103) sowie einer Steuereinheit (133), wobei das lineare Transportsystem (101) eine Führungsschiene (105) zum Führen der beweglichen Einheit (103), mehrere stationäre Einheiten (111) sowie einen Linearmotor (107) zum Antreiben der beweglichen Einheit (103) entlang der Führungsschiene (105) aufweist, wobei der Linearmotor (107) einen Stator (109) und einen Läufer (113) umfasst, wobei der Stator (109) die stationären Einheiten (111) umfasst, welche jeweils eine oder mehrere Antriebsspulen (135) umfassen, wobei der Läufer (113) an der beweglichen Einheit (103) angeordnet ist und einen oder mehrere Magnete (117) umfasst, wobei die stationären Einheiten (111) jeweils eine oder mehrere Energiesendespulen (125) umfassen, wobei jede Energiesendespule (125) eine Ansteuerungselektronik (123) aufweist,
**dadurch gekennzeichnet, dass**
die bewegliche Einheit (103) mindestens eine Energieempfangsspule (127) umfasst, wobei die Steuereinheit (133) eingerichtet ist,
Positionsdaten der Energieempfangsspule (127) der beweglichen Einheit (103) zu ermitteln,
Energiesendespulen (125) der stationären Einheiten (111) anhand der Positionsdaten der Energieempfangsspule (127) der beweglichen Einheit (103) auszuwählen, und
eine Energiemengensignals an die Ansteuerungselektroniken (123) der ausgewählten Energiesendespulen (125) auszugeben,
wobei die Ansteuerungselektronik (123) eingerichtet ist, ein Energiemengensignal für die betreffende Energiesendespule (125) einzulesen,
das Energiemengensignal in ein Puls-Pausen-Verhältnis umzusetzen, und
die Energiesendespule (125) anhand des Puls-Pausen-Verhältnisses anzusteuern, um einen Strom durch die Energiesendespule (125) zu steuern, wobei, wenn die von der Steuereinheit (133) ermittelten Positionsdaten der Energieempfangsspule (127) der beweglichen Einheit (103) ergeben, dass sich die Energieempfangsspule (127) der beweglichen Einheit (103) von einer ersten Energiesendespule (151) zu einer zweiten Energiesendespule (153) bewegt, wobei das Energiemengensignal an eine erste Ansteuerungselektronik (161) der ersten Energiesendespule (151) und eine zweite Ansteuerungselektronik (163) der zweiten Energiesendespule (153) ausgegeben wird und die erste Ansteuerungselektronik (161) der ersten Energiesendespule (151) und die zweite Ansteuerungselektronik (163) der zweiten Energiesendespule (153) jeweils anhand eines Synchronisationssignals (241) der Steuereinheit (133) synchronisiert werden, wobei ein erster Zähler der ersten Ansteuerungselektronik (151) und ein zweiter Zähler der zweiten Ansteuerungselektronik (161) anhand des Synchronisationssignals (241) gleichzeitig gestartet werden.

13. Lineares Transportsystem (101) nach Anspruch 12, wobei die Ansteuerungselektronik (123) zumindest eine erste Halbbrücke (190) mit einem ersten Schalter (194) und einem zweiten Schalter (195) und eine zweite Halbbrücke (191) mit einem dritten Schalter (196) und einem vierten Schalter (197) aufweist, wobei die Energiesendespule (125) zwischen einem ersten Halbbrückenmittelpunkt (192) und einem zweiten Halbbrückenmittelpunkt (193) angeordnet ist, wobei der erste Halbbrückenmittelpunkt (192) zwischen dem ersten Schalter (194) und dem zweiten Schalter (195) angeordnet ist, wobei der zweite Halbbrückenmittelpunkt (193) zwischen dem dritten Schalter (196) und dem vierten Schalter (197) angeordnet ist, wobei der Zähler (201) jeweils von einem Minimalwert (210) bis zu einem Maximalwert (211) nach oben zählt und anschließend vom Maximalwert (211) zum Minimalwert (210) nach unten zählt, wobei das Energiemengensignal mit einem oberen Zählerwert (212) und einem unteren Zählerwert (213) verknüpft wird, wobei der erste Schalter (194) und der vierte Schalter (197) leitend geschalten werden, wenn der Zähler (201) oberhalb des oberen Zählerwertes (212) liegt, und der zweite Schalter (195) und der dritte Schalter (196) leitend geschalten werden, wenn der Zähler (201) unterhalb des unteren Zählerwertes (213) liegt.

14. Lineares Transportsystem (101) nach Anspruch 13, wobei, wenn die Positionsdaten ergeben, dass die Energieempfangsspule (127) zwischen der ersten Energiesendespule (151) und der zweiten Energiesendespule (152) angeordnet ist, der obere Zählerwert (212) reduziert und der untere Zählerwert (213) erhöht wird.

15. Lineares Transportsystem (101) nach Anspruch 13 oder 14, wobei der obere Zählerwert (212) und der untere Zählerwert (213) anhand einer im Bereich der Energiesendespule (125) gemessenen Temperatur angepasst werden.

## Claims

1. A method for transferring energy from a stationary unit (111) to a movable unit (103) of a linear transport system (101), the linear transport system (101) comprising a guide rail (105) for guiding the movable unit (103), a plurality of stationary units (111), a controller (133) as well as a linear motor (107) for driving the movable unit (103) along the guide rail (105), the linear motor (107) comprising a stator (109) and a rotor (113), the stator (109) including the stationary units (111) each comprising one or a plurality of drive coils (135), the rotor (113) being arranged on the movable unit (103) and comprising one or a plurality of magnets (117), the stationary units (111) each comprising one or a plurality of energy-transmitting coils (125), each energy-transmitting coil (125) having an actuation electronics (123),
**characterized in that**
the movable unit (103) comprises at least one energy-receiving coil (127), wherein the controller (133) carries out the following steps:
- detecting position data of the energy-receiving coil (127) of the movable unit (103),
- selecting energy-transmitting coils (125) of the stationary units (111) on the basis of the position data of the energy-receiving coil (127) of the movable unit (103), and
- outputting an energy quantity signal to the actuation electronics (123) of the selected energy-transmitting coils (125),
wherein the actuation electronics (123) of the selected energy-transmitting coils (125) carry out the following steps:
- reading in the energy quantity signal for the relevant energy-transmitting coil (125);
- converting the energy quantity signal into a pulse-pause ratio for actuating the energy-transmitting coil (125) with the aid of a counter (201), and
- actuating the energy-transmitting coil (125) based on the pulse-pause ratio in order to control a current through the energy-transmitting coil (125),
wherein, if the position data of the energy-receiving coil (127) of the movable unit (103) determined by the controller (133) reveal that the energy-receiving coil (127) of the movable unit (103) moves away from a first energy-transmitting coil (151) to a second energy-transmitting coil (153), wherein the energy quantity signal is output to a first actuation electronics (161) of the first energy-transmitting coil (151) and to a second actuation electronics (163) of the second energy-transmitting coil (153) and the first actuation electronics (161) of the first energy-transmitting coil (151) and the second actuation electronics (163) of the second energy-transmitting coil (153) are each synchronized on the basis of a synchronization signal (241) of the controller (133), wherein a first counter of the first actuation electronics (151) and a second counter of the second actuation electronics (161) are started simultaneously on the basis of a synchronization signal (241).

2. The method according to claim 1, wherein the actuation electronics (123) comprises at least a first half-bridge (190) having a first switch (194) and a second switch (195) and a second half-bridge (191) having a third switch (196) and a fourth switch (197), wherein the energy-transmitting coil (125) is arranged between a first half-bridge center (192) and a second half-bridge center (193), the first half-bridge center (192) being arranged between the first switch (194) and the second switch (195), the second half-bridge center (193) being arranged between the third switch (196) and the fourth switch (197), wherein the counter (201) respectively counts up from a minimum value (210) to a maximum value (211) and then counts down from the maximum value (211) to the minimum value (210), the energy quantity signal being associated with an upper counter value (212) and a lower counter value (213), wherein the first switch (194) and the fourth switch (197) are rendered conductive when the counter (201) is above the upper counter value (212), and the second switch (195) and the third switch (196) are rendered conductive when the counter (201) is below the lower counter value (213).

3. The method according to claim 2, wherein the upper counter value (212) is larger than three-fourths of a difference of the maximum value (211) and the minimum value (210) plus the minimum value (210) and the lower counter value (213) is less than one-fourth of the difference of the maximum value (211) and the minimum value (210) plus the minimum value (210) when a nominal power is to be transmitted.

4. The method according to claim 3, wherein for transmitting the nominal power, the upper counter value (212) is at least seven-eighths of the difference between the maximum value (211) and the minimum value (210) plus the minimum value (210), and the lower counter value (213) is at most one-eighth of the difference between the maximum value (211) and the minimum value (210) plus the minimum value (210).

5. The method according to claim 3 or 4, wherein for transmitting a peak power exceeding the nominal power, the upper counter value (212) is at least three quarters of the difference between the maximum value (211) and the minimum value (210) plus the minimum value (210), and the lower counter value (213) is at most one quarter of the difference between the maximum value (211) and the minimum value (210) plus the minimum value (210).

6. The method according to any one of claims 2 to 5, further comprising reading in a data transmission signal (243) from the actuation electronics (123), wherein the data transmission signal (243) includes that a data transmission is taking place in the region of the energy-transmitting coil (125), wherein at least once, when the counter (201) is above the upper counter value (212), the first switch (194) and the fourth switch (197) are switched to non-conductive, and at least once when the counter (201) is below the lower counter value (213), the second switch (195) and the third switch (196) are switched to non-conductive.

7. The method according to any one of claims 2 to 6, wherein, when the position data indicates that the energy-receiving coil (127) is located between the first energy-transmitting coil (151) and the second energy-transmitting coil (152), the upper counter value (212) is reduced and the lower counter value (213) is increased.

8. The method according to claim 7, wherein in the event that a power larger than the nominal power is to be transmitted, a thermal load of the energy transmission is determined and a cooling-off time is calculated, wherein a renewed reduction of the upper counter value (212) and a renewed increase of the lower counter value (213) such that a power larger than the nominal power may be transmitted occurs only after the cooling-off time.

9. The method according to claim 7 or 8, wherein a current to the drive coils (135) is changed in such a way that the movable unit (103) moves faster.

10. The method according to claim 9, wherein an increase time period during which the energizing of the drive coils (135) is changed is calculated from a speed of the movable unit (103).

11. The method according to any one of claims 2 to 10, wherein the upper counter value (212) and the lower counter value (213) are adjusted based on a temperature measured in the region of the energy-transmitting coil (125).

12. A linear transport system (101) comprising at least one stationary unit (111) and at least one movable unit (103), and a controller (133), wherein the linear transport system (101) comprises a guide rail (105) for guiding the movable unit (103), a plurality of stationary units (111), and a linear motor (107) for driving the movable unit (103) along the guide rail (105), the linear motor (107) comprising a stator (109) and a rotor (113), the stator (109) comprising the stationary units (111), each comprising one or a plurality of drive coils (135), the rotor (113) being arranged on the movable unit (103) and comprising one or a plurality of magnets (117), the stationary units (111) each comprising one or a plurality of energy-transmitting coils (125), each energy-transmitting coil (125) comprising an actuation electronics (123),
**characterized in that** the movable unit (103) comprises at least one energy-receiving coil (127),
wherein the controller (133) is set up
to determine position data of the energy-receiving coil (127) of the movable unit (103),
to select energy-transmitting coils (125) of the stationary units (111) on the basis of the position data of the energy-receiving coil (127) of the movable unit (103), and
to output an energy quantity signal to the actuation electronics (123) of the selected energy-transmitting coils (125),
the actuation electronics (123) being set up to read in an energy quantity signal for the relevant energy-transmitting coil (125),
to convert the energy quantity signal it into a pulse-pause ratio and
to actuate the energy-transmitting coil (125) on the basis of the pulse-pause ratio in order to control a current through the energy-transmitting coil (125), wherein, if the position data of the energy-receiving coil (127) of the movable unit (103) determined by the controller (133) reveal that the energy-receiving coil (127) of the movable unit (103) moves away from a first energy-transmitting coil (151) to a second energy-transmitting coil (153), wherein the energy quantity signal is output to a first actuation electronics (161) of the first energy-transmitting coil (151) and to a second actuation electronics (163) of the second energy-transmitting coil (153) and the first actuation electronics (161) of the first energy-transmitting coil (151) and the second actuation electronics (163) of the second energy-transmitting coil (153) are each synchronized on the basis of a synchronization signal (241) of the controller (133), wherein a first counter of the first actuation electronics (151) and a second counter of the second actuation electronics (161) are started simultaneously on the basis of a synchronization signal (241).

13. The linear transport system (101) according to claim 12, wherein the actuation electronics (123) comprises at least a first half bridge (190) having a first switch (194) and a second half bridge (191) having a third switch (196) and a fourth switch (197), wherein the energy-transmitting coil (125) is arranged between a first half-bridge center (192) and a second half-bridge center (193), wherein the first half-bridge center (192) is arranged between the first switch (194) and the second switch (195), wherein the second half-bridge center (193) is arranged between the third switch (196) and the fourth switch (197), wherein the counter (201) in each case counts up from a minimal value (210) to a maximum value (211) and subsequently counts down from a maximum value (211) to a minimal value (210), wherein the energy quantity signal is linked to an upper counter value (212) and to a lower counter value (213), wherein the first switch (194) and the fourth switch (197) are switched to conductive if the counter (201) is above the upper counter value (212) and the second switch (195) and the third switch (196) are switched to conductive if the counter (201) is below the lower counter value (213).

14. The linear transport system (101) according to claim 13, wherein, if the position data reveal that the energy-receiving coil (127) is arranged between the first energy-transmitting coil (151) and the second energy-transmitting coil (152), the upper counter value (212) is reduced and the lower counter value (213) is increased.

15. The linear transport system (101) according to claims 13 or 14, wherein the upper counter value (212) and the lower counter value (213) are adjusted on the basis of a temperature measured in the region of the energy-transmitting coil (125).

## Revendications

1. Procédé de transfert d'énergie d'une unité stationnaire (111) à une unité mobile (103) d'un système (101) de transport linéaire, le système (101) de transport linéaire comprenant un rail de guidage (105) destiné à guider l'unité mobile (103), plusieurs unités stationnaires (111), une unité de commande (133) et un moteur linéaire (107) destiné à entraîner l'unité mobile (103) le long du rail de guidage (105), le moteur linéaire (107) comprenant un stator (109) et un rotor (113), le stator (109) comprenant les unités stationnaires (111), chacune comprenant une ou plusieurs bobines d'entraînement (135), le rotor (113) étant agencé sur l'unité mobile (103) et comprenant un ou plusieurs aimants (117), les unités stationnaires (111) comprenant chacune une ou plusieurs bobines (125) d'émission d'énergie, chaque bobine (125) d'émission d'énergie comprenant une électronique de commande (123), **caractérisé en ce que**
l'unité mobile (103) comprend au moins une bobine (127) de réception d'énergie, l'unité de commande (133) mettant en œuvre les étapes suivantes :
- déterminer des données de position de la bobine (127) de réception d'énergie de l'unité mobile (103),
- sélectionner des bobines (125) d'émission d'énergie des unités stationnaires (111) sur la base des données de position de la bobine (127) de réception d'énergie de l'unité mobile (103), et
- émettre un signal de quantité d'énergie vers les électroniques de commande (123) des bobines (125) d'émission d'énergie sélectionnées,
les électroniques de commande (123) des bobines (125) d'émission d'énergie sélectionnées mettant en œuvre les étapes suivantes :
- lecture du signal de quantité d'énergie pour la bobine (125) d'émission d'énergie concernée,
- conversion du signal de quantité d'énergie en un rapport impulsion/pause pour la commande de la bobine (125) d'émission d'énergie au moyen d'un compteur (201), et
- commande de la bobine (125) d'émission d'énergie au moyen du rapport impulsion/pause pour commander un courant à travers la bobine (125) d'émission d'énergie, le signal de quantité d'énergie, lorsque les données de position de la bobine (127) de réception d'énergie de l'unité mobile (103) déterminées par l'unité de commande (133) indiquent que la bobine (127) de réception d'énergie de l'unité mobile (103) se déplace d'une première bobine (151) d'émission d'énergie à une deuxième bobine (153) d'émission d'énergie, étant délivré à une première électronique de commande (161) de la première bobine (151) d'émission d'énergie et à une deuxième électronique de commande (163) de la deuxième bobine (153) d'émission d'énergie, et la première électronique de commande (161) de la première bobine (151) d'émission d'énergie et la deuxième électronique de commande (163) de la deuxième bobine (153) d'émission d'énergie étant synchronisées respectivement en utilisant un signal de synchronisation (241) de l'unité de commande (133), un premier compteur de la première électronique de commande (151) et un deuxième compteur de la deuxième électronique de commande (161) étant démarrés simultanément au moyen du signal de synchronisation (241).

2. Procédé selon la revendication 1, dans lequel l'électronique de commande (123) comprend au moins un premier demi-pont (190) avec un premier commutateur (194) et un deuxième commutateur (195) et un deuxième demi-pont (191) avec un troisième commutateur (196) et un quatrième commutateur (197), la bobine (125) d'émission d'énergie étant agencée entre un premier point médian de demi-pont (192) et un deuxième point médian de demi-pont (193), le premier point médian de demi-pont (192) étant agencé entre le premier commutateur (194) et le deuxième commutateur (195), le deuxième point médian de demi-pont (193) étant agencé entre le troisième commutateur (196) et le quatrième commutateur (197), le compteur (201) comptant respectivement de façon croissante à partir d'une valeur minimale (210) jusqu'à une valeur maximale (211) et comptant ensuite de façon décroissante à partir de la valeur maximale (211) jusqu'à la valeur minimale (210), le signal de quantité d'énergie étant associé à une valeur de compteur supérieure (212) et à une valeur de compteur inférieure (213), le premier commutateur (194) et le quatrième commutateur (197) étant rendus conducteurs lorsque le compteur (201) est au-dessus de la valeur de compteur supérieure (212), et le deuxième commutateur (195) et le troisième commutateur (196) étant rendus conducteurs lorsque le compteur (201) est au-dessous de la valeur de compteur inférieure (213).

3. Procédé selon la revendication 2, dans lequel la valeur de compteur supérieure (212) est supérieure aux trois quarts d'une différence entre la valeur maximale (211) et la valeur minimale (210) augmentée de la valeur minimale (210) et la valeur de compteur inférieure (213) est inférieure au quart de la différence entre la valeur maximale (211) et la valeur minimale (210) augmentée de la valeur minimale (210), lorsqu'une puissance nominale doit être transmise.

4. Procédé selon la revendication 3, dans lequel, pour la transmission de la puissance nominale, la valeur de compteur supérieure (212) est au moins égale à sept huitièmes de la différence entre la valeur maximale (211) et la valeur minimale (210) augmentée de la valeur minimale (210) et la valeur de compteur inférieure (213) est au maximum égale à un huitième de la différence entre la valeur maximale (211) et la valeur minimale (210) augmentée de la valeur minimale (210).

5. Procédé selon la revendication 3 ou la revendication 4, dans lequel, pour transmettre une puissance de crête dépassant la puissance nominale, la valeur de compteur supérieure (212) est au moins égale aux trois quarts de la différence entre la valeur maximale (211) et la valeur minimale (210) augmentée de la valeur minimale (210), et la valeur de compteur inférieure (213) est au plus égale au quart de la différence entre la valeur maximale (211) et la valeur minimale (210) augmentée de la valeur minimale (210).

6. Procédé selon l'une des revendications 2 à 5, dans lequel un signal (243) de transmission de données est en outre lu par l'électronique de commande (123), le signal (243) de transmission de données impliquant qu'une transmission de données a lieu dans la zone de la bobine (125) d'émission d'énergie, le premier commutateur (194) et le quatrième commutateur (197) étant, au moins une fois, lorsque le compteur (201) se trouve au-dessus de la valeur de compteur supérieure (212), rendus non conducteurs et le deuxième commutateur (195) et le troisième commutateur (196) étant, au moins une fois, lorsque le compteur (201) se trouve en dessous de la valeur de compteur inférieure (213), rendus non conducteurs.

7. Procédé selon l'une des revendications 2 à 6, dans lequel, lorsque les données de position indiquent que la bobine (127) de réception d'énergie est située entre la première bobine (151) d'émission d'énergie et la deuxième bobine d'émission d'énergie (152), la valeur de compteur supérieure (212) est réduite et la valeur de compteur inférieure (213) est augmentée.

8. Procédé selon la revendication 7, dans lequel, dans le cas où une puissance supérieure à la puissance nominale doit être transmise, une charge thermique de la transmission d'énergie est déterminée et un temps de refroidissement est calculé, une nouvelle réduction de la valeur de compteur supérieure (212) et une nouvelle augmentation de la valeur de compteur inférieure (213) de telle sorte qu'une puissance supérieure à la puissance nominale puisse être transmise, n'étant effectuées qu'après le temps de refroidissement.

9. Procédé selon la revendication 7 ou la revendication 8, dans lequel on modifie une alimentation électrique des bobines d'entraînement (135) de manière à accélérer le déplacement de l'unité mobile (103).

10. Procédé selon la revendication 9, dans lequel une durée d'augmentation pendant laquelle l'alimentation électrique des bobines d'entraînement (135) est modifiée est calculée à partir d'une vitesse de l'unité mobile (103) .

11. Procédé selon l'une des revendications 2 à 10, dans lequel la valeur de compteur supérieure (212) et la valeur de compteur inférieure (213) sont ajustées à partir d'une température mesurée au niveau de la bobine (125) d'émission d'énergie.

12. Système (101) de transport linéaire comprenant au moins une unité stationnaire (111) et au moins une unité mobile (103) ainsi qu'une unité de commande (133), le système (101) de transport linéaire présentant un rail de guidage (105) pour guider l'unité mobile (103), plusieurs unités stationnaires (111) ainsi qu'un moteur linéaire (107) pour entraîner l'unité mobile (103) le long du rail de guidage (105), le moteur linéaire (107) comprenant un stator (109) et un rotor (113), le stator (109) comprenant les unités stationnaires (111), chacune comprenant une ou plusieurs bobines d'entraînement (135), le rotor (113) étant agencé sur l'unité mobile (103) et comprenant un ou plusieurs aimants (117), les unités stationnaires (111) comprenant chacune une ou plusieurs bobines (125) d'émission d'énergie, chaque bobine (125) d'émission d'énergie comprenant une électronique de commande (123),
**caractérisé en ce que**
l'unité mobile (103) comprend au moins une bobine (127) de réception d'énergie, l'unité de commande (133) étant agencée
de façon à déterminer des données de position de la bobine (127) de réception d'énergie de l'unité mobile (103),
de façon à sélectionner des bobines (125) d'émission d'énergie des unités stationnaires (111) sur la base des données de position de la bobine (127) de réception d'énergie de l'unité mobile (103), et
de façon à émettre un signal de quantité d'énergie vers les électroniques de commande (123) des bobines (125) d'émission d'énergie sélectionnées,
l'électronique de commande (123) étant conçue de façon à lire un signal de quantité d'énergie pour la bobine (125) d'émission d'énergie concernée,
à convertir le signal de quantité d'énergie en un rapport impulsion/pause, et
à commander la bobine (125) d'émission d'énergie sur la base du rapport impulsion/pause afin de commander un courant à travers la bobine (125) d'émission d'énergie, le signal de quantité d'énergie étant, lorsque les données de position de la bobine (127) de réception d'énergie de l'unité mobile (103) déterminées par l'unité de commande (133) indiquent que la bobine (127) de réception d'énergie de l'unité mobile (103) se déplace d'une première bobine (151) d'émission d'énergie à une deuxième bobine (153) d'émission d'énergie, délivré à une première électronique de commande (161) de la première bobine (151) d'émission d'énergie et à une deuxième électronique de commande (163) de la deuxième bobine (153) d'émission d'énergie, et la première électronique de commande (161) de la première bobine (151) d'émission d'énergie et la deuxième électronique de commande (163) de la deuxième bobine (153) d'émission d'énergie étant synchronisées respectivement en utilisant un signal de synchronisation (241) de l'unité de commande (133), un premier compteur de la première électronique de commande (151) et un deuxième compteur de la deuxième électronique de commande (161) étant démarrés simultanément au moyen du signal de synchronisation (241).

13. Système (101) de transport linéaire selon la revendication 12, dans lequel l'électronique de commande (123) comprend au moins un premier demi-pont (190) comprenant un premier commutateur (194) et un deuxième commutateur (195) et un deuxième demi-pont (191) comprenant un troisième commutateur (196) et un quatrième commutateur (197), la bobine (125) d'émission d'énergie étant agencée entre un premier point médian de demi-pont (192) et un deuxième point médian de demi-pont (193), le premier point médian de demi-pont (192) étant agencé entre le premier commutateur (194) et le deuxième commutateur (195), le deuxième point médian de demi-pont (193) étant agencé entre le troisième commutateur (196) et le quatrième commutateur (197), le compteur (201) comptant respectivement de façon croissante à partir d'une valeur minimale (210) jusqu'à une valeur maximale (211) et comptant ensuite de façon décroissante à partir de la valeur maximale (211) jusqu'à la valeur minimale (210), le signal de quantité d'énergie étant associé à une valeur de compteur supérieure (212) et à une valeur de compteur inférieure (213), le premier commutateur (194) et le quatrième commutateur (197) étant rendus conducteurs lorsque le compteur (201) se trouve au-dessus de la valeur de compteur supérieure (212), et le deuxième commutateur (195) et le troisième commutateur (196) étant rendus conducteurs lorsque le compteur (201) se trouve en dessous de la valeur de compteur inférieure (213).

14. Système (101) de transport linéaire selon la revendication 13, dans lequel, lorsque les données de position indiquent que la bobine (127) de réception d'énergie est située entre la première bobine (151) d'émission d'énergie et la deuxième bobine (152) d'émission d'énergie, la valeur de compteur supérieure (212) est réduite et la valeur de compteur inférieure (213) est augmentée.

15. Système (101) de transport linéaire selon la revendication 13 ou la revendication 14, dans lequel la valeur de compteur supérieure (212) et la valeur de compteur inférieure (213) sont adaptées en utilisant une température mesurée dans la zone de la bobine de transmission d'énergie (125).
